# EUROPEAN PATENT APPLICATION

(11) **EP 4 668 509 A1**
(43) Date of publication of application: **24.12.2025**
(21) Application number: 23948952.9
(22) Date of filing: 13.09.2023
(51) Int. Cl.: H02B 1/24, H02B 1/26, H01M 10/04

(54) **POWER DISTRIBUTION APPARATUS, BATTERY, AND ELECTRIC DEVICE**

(30) Priority: 17.08.2023 CN 202311041198
(71) Applicant: Contemporary Amperex Technology Co., Limited, Ningde, Fujian 352100 (CN)
(72) Inventor: LI, Yuanxin, Ningde, Fujian 352100 (CN); WANG, Chong, Ningde, Fujian 352100 (CN); ZHENG, Chenling, Ningde, Fujian 352100 (CN)
(74) Representative: Gong, Jinping
(86) International application number: PCT/CN2023/118587
(87) International publication number: WO 2025/035527

(57) **Abstract**

A power distribution apparatus (100), a battery (1100), and a power consuming device are provided. The power distribution apparatus (100) includes an electrical assembly (110); the electrical assembly (110) includes at least two electrical members (1101); among the at least two electrical members (1101), an electrical member having a maximum size in a first direction is a first electrical member (111); a size of the first electrical member (111) in the first direction is not greater than sizes of the first electrical member (111) in other directions; and a ratio of a size of the electrical assembly (110) in the first direction to the size of the first electrical member (111) in the first direction is M, where 1≤M≤1.2. Therefore, it is possible to make the size of the power distribution apparatus in the first direction small, and the whole power distribution apparatus can be flat, so that a space occupied by the power distribution apparatus in a preset direction can be reduced, thereby providing a larger mounting space for other components, reducing the arrangement difficulty of the other components, improving the structural compactness of the power consuming device and the battery, facilitating improvement of the performance of the battery and the power consuming device, and reducing manufacturing costs of the power consuming device and the battery.

## Description

### CROSS-REFERENCE TO RELATED APPLICATIONS

The present application claims priority to Chinese Patent Application No. 202311041198.3, entitled "POWER DISTRIBUTION APPARATUS, BATTERY, AND POWER CONSUMING DEVICE" filed with the China National Intellectual Property Administration on August 17, 2023, which is incorporated by reference in its entirety.

### TECHNICAL FIELD

The present application relates to the field of electrical distribution technologies, and in particular, to a power distribution apparatus, a battery, and a power consuming device.

### BACKGROUND

With the development of science and technology, there are more and more power consuming devices using a battery as a power supply, and a power distribution apparatus provided with a power consuming device is applied increasingly. The power distribution apparatus may be configured to be responsible for power distribution and management of a high-voltage circuit in the power consuming device. The power distribution apparatus may also be applied to the battery, to control charge and discharge of the battery. However, an electrical assembly in the power distribution apparatus usually includes a plurality of electrical members, but arrangement of the electrical members in the electrical assembly has low space utilization, requiring a large mounting space for the power distribution apparatus, and affecting the performance of the power consuming device and the battery.

The statement herein merely provides background information related to the present application and does not necessarily constitute the prior art.

### SUMMARY

An objective of embodiments of the present application is to: provide a power distribution apparatus, a battery, and a power consuming device, and includes but is not limited to resolving problems in the related technology that arrangement of the electrical members in the power distribution apparatus has low space utilization, requiring a large mounting space for the power distribution apparatus, and affecting the performance of the power consuming device and the battery.

The technical solutions used in the embodiments of the present application are as follows:
According to a first aspect, a power distribution apparatus is provided. The power distribution apparatus includes an electrical assembly, where the electrical assembly includes at least two electrical members; among the at least two electrical members, an electrical member having a maximum size in a first direction is a first electrical member; a size of the first electrical member in the first direction is not greater than sizes of the first electrical member in other directions; and a ratio of a size of the electrical assembly in the first direction to the size of the first electrical member in the first direction is M, where 1≤M≤1.2.

In the power distribution apparatus of this embodiment of the present application, the power distribution apparatus includes an electrical assembly, where the electrical assembly includes at least two electrical members; among the at least two electrical members, an electrical member having a maximum size in a first direction is a first electrical member, that is, the first electrical member is an electrical member having a maximum size in the first direction in the electrical assembly; and a ratio of a size of the electrical assembly in the first direction to the size of the first electrical member in the first direction is M, where 1≤M≤1.2. Therefore, the size of the power distribution apparatus in the first direction is mainly determined by the size of the first electrical member in the first direction, and in addition, the size of the first electrical member in the first direction is not greater than the sizes of the first electrical member in the other directions, that is, the size of the first electrical member in the first direction is a minimum size of the first electrical member. In this way, the size of the power distribution apparatus in the first direction may be small, and the size of the power distribution apparatus in the first direction is not greater than the sizes of the power distribution apparatus in the other directions, so that the entire power distribution apparatus has a flat shape. In this case, when the size of the mounting space provided by the power consuming device and the battery in a preset direction is limited, the power distribution apparatus may be mounted in the mounting space in a manner in which the first direction is parallel or nearly parallel to the preset direction, to reduce a space occupied by the power distribution apparatus in the preset direction, thereby providing a larger mounting space for other components, reducing the arrangement difficulty of the other components, improving the structural compactness of the power consuming device and the battery, facilitating improvement of the performance of the battery and the power consuming device, and reducing manufacturing costs of the power consuming device and the battery.

In an embodiment, 1≤M≤1.1.

By using the technical solution of this embodiment, through a design in which 1≤M≤1.1, a difference between the size of the first electrical member in the first direction and the size of the electrical assembly in the first direction is smaller, so that the size of the electrical assembly in the first direction is smaller, the mounting space required by the power distribution apparatus in the first direction is smaller, and the overall structural compactness is also better, thereby improving the structural compactness of the power consuming device and the battery 1100, and improving the performance of the battery and the power consuming device.

In an embodiment, the power distribution apparatus further includes a mounting base, and the first electrical member is mounted on the mounting base; and an overall size of the first electrical member plus the mounting base in the first direction is not greater than sizes of the power distribution apparatus in other directions.

By using the technical solution of this embodiment, the entire power distribution apparatus still has a flat shape, and the space occupied by the power distribution apparatus in the preset direction can be reduced, to help improve the structural compactness of the power consuming device and the battery, and improve the performance of the battery and the power consuming device.

In an embodiment, the mounting base has an outer interface, the outer interface forms a first preset angle with the first direction, and the first preset angle is A₁, where 0°≤A₁≤45°, or 45°<A₁≤90°.

By using the technical solution of this embodiment, the power distribution apparatus may be applicable to different mounting spaces, thereby improving the application range of the power distribution apparatus.

In an embodiment, the power distribution apparatus further includes a connector configured to electrically connect the electrical member and an external component, and the connector is mounted on the mounting base.

By using the technical solution of this embodiment, the connector is directly integrated into the power distribution apparatus, and the power distribution apparatus has a high integration degree, to help improve performance, reduce costs, and also facilitate connection of the power distribution apparatus to the external component.

In an embodiment, the first electrical member is a fuse, a resistor, a relay, or a current sensor.

By using the technical solution of this embodiment, a fuse, a resistor, a relay, or a current sensor in the power distribution apparatus may be flexibly selected as the first electrical member according to an outline size of the fuse, the resistor, the relay, or the current sensor, so that different types of power distribution apparatuses are flattened, and structural compactness of the different types of power distribution apparatuses is improved.

In an embodiment, when the first electrical member is a relay, the relay includes a switching unit, the mounting base is constructed with a first accommodating cavity, and the switching unit is exposed in the first accommodating cavity.

By using the technical solution of this embodiment, the switching unit of the relay is directly exposed in the first accommodating cavity. In this way, in the power distribution apparatus, a space occupied by the shell of the relay may be saved, thereby improving structural compactness of the power distribution apparatus, and helping improve performance of the power distribution apparatus and reduce manufacturing costs. In addition, the relay is generally a component with a large volume in the power distribution apparatus, and the shell of the relay is omitted, so that a large space can be saved for the power distribution apparatus, thereby effectively improving the structural compactness of the power distribution apparatus.

In an embodiment, a first gap is formed between at least one outer wall surface of the switching unit and a cavity wall surface corresponding to the first accommodating cavity, and at least one first gap is filled with a structural adhesive.

By using the technical solution of this embodiment, the switching unit is bonded in the first accommodating cavity by using the structural adhesive, and an assembly material of the relay and the mounting base is simple, which helps improve the production efficiency of the power distribution apparatus.

In an embodiment, at least one cavity wall surface of the first accommodating cavity is provided with a rib, and the rib is configured to butt against the outer wall surface of the switching unit.

By using the technical solution of this embodiment, the switching unit may be positioned by butting against the rib by the switching unit. In addition, a spacing of the first gap may be further limited, to facilitate subsequent filling of the structural adhesive.

In an embodiment, the relay further includes a connection terminal configured to electrically connect to another electrical member, the switching unit is connected to the connection terminal, the first accommodating cavity has a first opening, and the connection terminal protrudes from the first opening.

By using the technical solution of this embodiment, the connection terminal protrudes from the first opening, that is, the connection terminal is exposed out of the first accommodating cavity, so that it may be convenient to electrically connect the connection terminal to another electrical member.

In an embodiment, the power distribution apparatus further includes an insulating covering member, the insulating covering member covers the first opening, the insulating covering member is provided with a through-going hole, and the connection terminal goes through the through-going hole, to expose the connection terminal out of the mounting base.

By using the technical solution of this embodiment, the insulating covering member separates the switching unit from the external environment, thereby insulating and protecting the relay, so as to improve use reliability of the power distribution apparatus.

In an embodiment, the relay has a plurality of connection terminals, a lateral portion of the insulating covering member that faces away from the switching unit is provided with an insulating and isolating portion, and the insulating and isolating portion is located between two adjacent connection terminals.

By using the technical solution of this embodiment, the insulating and isolating portion may insulate and isolate two adjacent connection terminals, thereby reducing a short-circuit risk and improving use reliability of the power distribution apparatus.

In an embodiment, one of a cavity wall of the first accommodating cavity and the insulating covering member is provided with a snap-fit groove, and the other is provided with a first snap-fit fastener and a first opening configured to be snap-fit to the snap-fit groove.

By using the technical solution of this embodiment, the first snap-fit fastener and the snap-fit groove are snap-fit to each other to fix the insulating covering member. The fixing structure is simple and the assembly operation is simple, which helps improve the production efficiency and reduce the manufacturing costs.

In an embodiment, the power distribution apparatus further includes a first electrical connection member, the first electrical connection member has a connection end, the electrical member is provided with a plugging terminal configured to electrically connect to another electrical member, and the connection end is configured to electrically plug into a plugging terminal of at least one of the electrical members.

By using the technical solution of this embodiment, the first electrical connection member may implement communication between the electrical member and another electrical member, and the plugging terminal and the connection end are electrically connected in an electrical plug manner. The connection manner is simple, and assembly of the power distribution apparatus is convenient.

In an embodiment, the power distribution apparatus further includes a first shell cover, the first electrical connection member is mounted on the first shell cover, the first shell cover is mounted on the mounting base, and a plugging opening of the plugging terminal is disposed toward the first shell cover.

By using the technical solution of this embodiment, because the plugging opening of the plugging terminal faces the first shell cover, during assembly of the power distribution apparatus, assembly of the components and electrical plugging between the electrical member and the first electrical connection member may be simultaneously completed, to help improve assembly efficiency of the power distribution apparatus.

In an embodiment, the first electrical connection member is embedded in the first shell cover.

By using the technical solution of this embodiment, the first shell cover may play a role in of insulating and protecting the first electrical connection member, thereby improving use reliability of the power distribution apparatus. In addition, the first electrical connection member is located in the first shell cover, to help save the space, improve overall structural compactness, and also help reduce an outline size of the power distribution apparatus.

In an embodiment, a ratio of a size of the electrical assembly in a second direction to a size of the first electrical member in the second direction is N, where 1≤N≤1.2, and the second direction intersects with the first direction.

By using the technical solution of this embodiment, the size of the entire electrical assembly in the second direction may be determined by the size of the first electrical member in the second direction. In this way, the entire power distribution apparatus may have a small size in the second direction, and the sizes of the power distribution apparatus in both the first direction and the second direction are small, so that the power distribution apparatus may be mounted in a narrow space, thereby further improving space utilization, improving structural compactness and performance of the power consuming device and the battery, and reducing manufacturing costs of the power consuming device and the battery.

In an embodiment, 1≤N≤1.1.

Through a design in which 1≤N≤1.1 of the technical solution of this embodiment, a difference between the size of the first electrical member in the second direction and the size of the electrical assembly in the second direction is smaller, so that the size of the electrical assembly in the second direction is smaller, the mounting space required by the power distribution apparatus in the second direction is smaller, and the overall structural compactness is also better, thereby improving the structural compactness of the power consuming device and the battery, and improving the performance of the battery and the power consuming device.

In an embodiment, the size of the first electrical member in the second direction is not less than sizes of the first electrical member in other directions.

By using the technical solution of this embodiment, the second direction is a maximum size direction of the first electrical member. In this way, a large mounting space may be provided for electrical members different from the first electrical member in the second direction, and stacked arrangement of the electrical members different from the first electrical member in the second direction is also facilitated, so as to reduce a size of the power distribution apparatus in a direction different from the first direction and the second direction of the first electrical member. The structural compactness of the power distribution apparatus is good, and the outline size of the power distribution apparatus is smaller, to help improve space utilization, improve structural compactness and performance of the power consuming device and the battery, and reduce manufacturing costs of the power consuming device and the battery.

In an embodiment, a plurality of first electrical members are provided, the plurality of first electrical members are arranged in a third direction, the third direction is perpendicular to the first direction, and the third direction is perpendicular to the second direction.

By using the technical solution of this embodiment, a plurality of first electrical members may be arranged in the third direction, and both the first direction and the second direction are perpendicular to the third direction. In this way, space occupation of the plurality of first electrical members in the first direction and the second direction may be reduced. The entire power distribution apparatus is long-strip-shaped, and the structure of the power distribution apparatus is more compact. In addition, the long-strip-shaped power distribution apparatus can also better use the narrow space in the power consuming device and the battery, entire space utilization of the power consuming device and the battery is high, and structural compactness of the power consuming device and the battery is good, to help improve performance of the power consuming device and the battery, and also help reduce manufacturing costs of the power consuming device and the battery.

In an embodiment, the first electrical member is an electrical member having a largest outline size.

By using the technical solution of this embodiment, the outline size of the first electrical member is the largest, and generally, the direction of the minimum size of the first electrical member is also greater than the minimum sizes of most other electrical members in the power distribution apparatus. Therefore, when the electrical members are arranged, the other electrical members in the power distribution apparatus do not protrude from the lateral portion of the first electrical member in the first direction, or a part that projects from the lateral portion of the first electrical member in the first direction is small, so that the size of the entire electrical assembly in the first direction is small, and the electrical assembly is flattened, to also help improve the structural compactness of the power distribution apparatus, and help improve the performance of the power consuming device and the battery.

According to a second aspect, a battery is provided, including the power distribution apparatus according to the foregoing embodiments.

According to a third aspect, a power consuming device is provided, including the power distribution apparatus according to the foregoing embodiments; and/or including the battery according to the foregoing embodiments.

The above descriptions only refer to an overview of the technical solution of the present application. To understand the technical means of the present application more clearly, it can be implemented according to the content of the descriptions. To make the foregoing and other objectives, features and advantages of the present application more apparent, the specific implementations of the present application are listed below.

### BRIEF DESCRIPTION OF THE DRAWINGS

To describe the technical solutions in the embodiments of the present application more clearly, the following briefly introduces the accompanying drawings required for describing the embodiments or the related art. Apparently, the accompanying drawings in the following descriptions show merely some embodiments of the present application, and a person of ordinary skill in the art may still derive other accompanying drawings from these accompanying drawings without creative efforts.
FIG. 1 is a schematic diagram of a structure of a vehicle according to an embodiment of the present application;
FIG. 2 is a schematic diagram of a structure of a battery according to another embodiment of the present application;
FIG. 3 is a schematic diagram of a structure of a battery cell according to still another embodiment of the present application;
FIG. 4 is a schematic exploded view of the battery cell shown in FIG. 3;
FIG. 5 is a schematic diagram of a structure of a power distribution apparatus according to still another embodiment of the present application;
FIG. 6 is a schematic exploded view of the power distribution apparatus shown in FIG. 5;
FIG. 7 is a schematic diagram of a structure of a first electrical member shown in in FIG. 6;
FIG. 8 is a schematic diagram of a structure of an electrical assembly shown in FIG. 6 from an angle of view;
FIG. 9 is a schematic diagram of a structure of an electrical assembly shown in FIG. 6 from another angle of view;
FIG. 10 is a schematic diagram of a structure of a mounting base and a connector that are shown in in FIG. 6;
FIG. 11 is a schematic diagram of a structure of a mounting base according to still another embodiment of the present application;
FIG. 12 is a schematic diagram of a structure of a mounting base and a connector according to still another embodiment of the present application;
FIG. 13 is a schematic diagram of a structure of a power distribution apparatus according to still another embodiment of the present application;
FIG. 14 is a schematic exploded view of the power distribution apparatus shown in FIG. 13;
FIG. 15 is a schematic exploded view of the power distribution apparatus shown in FIG. 13 with a thermally conductive member and a second shell cover hidden;
FIG. 16 is a cross-sectional view along a line A-A in FIG. 13;
FIG. 17 is a partial enlarged view at B in FIG. 15; and
FIG. 18 is a schematic diagram of a structure of a mounting base shown in in FIG. 15.

Reference numerals in the drawings are as follows:
1000 vehicle; 1100 battery; 1200 controller; 1300 motor; 10 box; 11 first part; 12 second part; 20 battery cell; 21 end cover; 211 electrode terminal; 212 pressure relief mechanism; 22 shell; 23 electrode assembly; 100 power distribution apparatus; 110 electrical assembly; 1101 electrical member; 111 first electrical member; 11101 relay; 11102 main positive relay; 11103 main negative relay; 1111 connection terminal; 1112 switching unit; 112 fuse; 113 pre-charge relay; 114 pre-charge resistor; 120 connector; 130 housing; 131 mounting base; 1311 first accommodating cavity; 13111 first opening; 13112 first gap; 13113 rib; 1312 second accommodating cavity; 1313 third accommodating cavity; 1314 fourth accommodating cavity; 1315 outer interface; 1316 snap-fit groove; 132 first shell cover; 1321 surrounding edge; 1322 fifth accommodating cavity; 1323 sixth accommodating cavity; 1324 seventh accommodating cavity; 1325 insulating and isolating plate; 13211 second snap-fit fastener; 133 second shell cover; 1331 accommodating hole; 141 insulating covering member; 1411 insulating and isolating portion; 1412 first snap-fit fastener; 1413: through-going hole. 142 plugging terminal; 151 first electrical connection member; 1511 connection end; 152 second electrical connection member; 153 third electrical connection member; 154 insulating member; and 160 thermally conductive member.

### DETAILED DESCRIPTION

Embodiments of the present application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain the present application rather than being construed as limitation to the present application.

In the descriptions of the present application, it should be understood that orientation or position relationships indicated by the terms such as "length", "width", "above", "below", "front", "rear", "left", "right", "vertical", "horizontal", "top", "bottom", "inside", and "outside" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as a limitation to the present application.

In addition, the terms such as "first" and "second" are used merely for the purpose of description, and shall not be construed as indicating or implying relative importance or implying a quantity of indicated technical features. Therefore, features defining "first", "second", and the like may explicitly or implicitly include one or more such features. In the description of the present application, "a plurality of" means two or more, unless otherwise expressly and specifically defined.

In the present disclosure, unless otherwise clearly specified and defined, terms such as "mounting", "interconnection", "connection", and "fixing" shall be understood in a broad sense, for example, may be a fixing connection, a detachable connection, an integral connection, a mechanical connection, an electrical connection, a direct connection, an indirect connection by using an intermediate medium, communication between interiors of two components, or interaction between two components. A person of ordinary skill in the art may understand specific meanings of the foregoing terms in the present application according to specific situations.

In the present application, for ease of description, a Z axis in the accompanying drawings represents an up-down direction, a positive direction of the Z axis represents up, and a negative direction of the Z axis represents down; an X axis in the accompanying drawings represents a left-right direction, a positive direction of the X axis represents right, and a negative direction of the Y axis represents left; a Y axis in the accompanying drawings represents a front-rear direction, a positive direction of the Y axis represents rear, and a negative direction of the Y axis represents front.

A power consuming device may refer to an apparatus using a battery as a power supply. The power supply provides power for the power consuming device, so as to drive the power consuming device to work. The power consuming device is usually provided with a power distribution apparatus, and the power distribution apparatus is configured to control running of a high-voltage circuit in the power consuming device. The "voltage" in the high-voltage circuit refers to an electric pressure, and the high-voltage circuit refers to a circuit whose electric pressure exceeds 60V For example, the power distribution apparatus may be a high-voltage power distribution box, and the high-voltage power distribution box may refer to a high-voltage power distribution unit (PDU) configured to be responsible for power distribution and management of the high-voltage circuit in the power consuming device, for example, applied to a new energy vehicle. The PDU is responsible for power distribution and management in a high-voltage circuit of the new energy vehicle, providing functions such as charge and discharge control, electric control on a high-voltage component, circuit overload and short-circuit protection, high-voltage sampling, and low-voltage control for the entire vehicle, and protecting and monitoring running of the high-voltage circuit. The high-voltage power distribution box may alternatively refer to a component applied to a battery and configured to control charge and discharge of the battery, for example, a battery disconnect unit (BDU). The BDU is a system for controlling charge and discharge of the battery, and a high-voltage power distribution box specifically designed for the battery.

However, with continuous increase of requirements on structural compactness and costs of a power consuming device and a battery, requirements on arrangement of electrical members in a power distribution apparatus are increasingly high. An electrical assembly of a power distribution apparatus usually includes a plurality of electrical members, and an arrangement manner of the plurality of electrical members usually directly affects an overall outline size of the power distribution apparatus. A larger overall size of the plurality of electrical members after being arranged indicates a larger overall outline size of the entire power distribution apparatus, and a larger mounting space required by the power distribution apparatus. Generally, a size of a mounting space provided by a battery and a power consuming device in a preset direction is relatively limited. However, when a power distribution apparatus is mounted in the mounting space, the power distribution apparatus occupies a large space in the preset direction, and therefore other components occupy a small space. This affects arrangement of the other components, and increases difficulty in arrangement of the other components, thereby affecting performance of the battery and the power consuming device.

In the power distribution apparatus of this embodiment of the present application, the power distribution apparatus includes an electrical assembly, where the electrical assembly includes at least two electrical members; among the at least two electrical members, an electrical member having a maximum size in a first direction is a first electrical member, that is, the first electrical member is an electrical member having a maximum size in the first direction in the electrical assembly; and a ratio of a size of the electrical assembly in the first direction to the size of the first electrical member in the first direction is M, and 1≤M≤1.2. Therefore, the size of the power distribution apparatus in the first direction is determined by the size of the first electrical member in the first direction, and in addition, the size of the first electrical member in the first direction is not greater than the sizes of the first electrical member in the other directions, that is, the size of the first electrical member in the first direction is a minimum size of the first electrical member. In this way, the size of the power distribution apparatus in the first direction may be small, so that the entire power distribution apparatus has a flat shape. In this case, when the size of the mounting space provided by the power consuming device and the battery in a preset direction is limited, the power distribution apparatus may be mounted in the mounting space in a manner in which the first direction is parallel or nearly parallel to the preset direction, to reduce a space occupied by the power distribution apparatus in the direction, thereby providing a larger mounting space for other components, reducing the arrangement difficulty of the other components, improving the structural compactness of the power consuming device and the battery, facilitating improvement of the performance of the battery and the power consuming device, and reducing manufacturing costs of the power consuming device and the battery.

The embodiments of the present application disclose a power distribution apparatus, a battery, and a power consuming device. From the perspective of development of the market situation, battery applications have proliferated. The batteries are used in energy storage power systems such as water power plants, fire power plants, wind power plants, and solar power plants, and are also widely used in electric mobility devices such as electric bicycles, electric motorcycles, electric vehicles, as well as in military equipment, aerospace, and other fields. With continuous expansion of the application fields of the power batteries, market demands for the power batteries are also expanding. The power consuming device may be, but is not limited to, a mobile phone, a tablet computer, a notebook computer, an electric toy, a power tool, an electric bike, an electric vehicle, a ship, a spacecraft, or the like. The electric toy may include a fixed or mobile electric toy, for example, a game console, an electric automobile toy, an electric ship toy, and an electric airplane toy. The spacecraft may include an airplane, a rocket, a spacecraft, a spaceship, and the like.

For ease of description, the power consuming device being a vehicle 1000 in an embodiment of the present application is used as an example to describe the following embodiments.

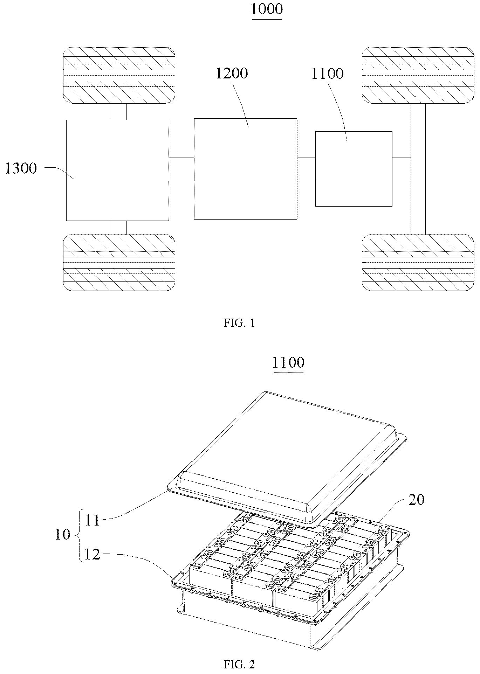

Referring to FIG. 1, the vehicle 1000 may be a fuel powered vehicle, a gas powered vehicle, or a new energy vehicle. The new energy vehicle may be a pure electric vehicle, a hybrid electric vehicle, an extended range vehicle, or the like. A battery 1100 is arranged inside the vehicle 1000. The battery 1100 may be arranged on the bottom, head, or tail of the vehicle 1000. The battery 1100 may be configured to supply power to the vehicle 1000. For example, the battery 1100 may be used as a power supply for operating the vehicle 1000. The vehicle 1000 may further include a controller 1200 and a motor 1300. The controller 1200 is configured to control the battery 1100 to supply power to the motor 1300, for example, to be used for working electricity requirements during startup, navigation, and driving of the vehicle 1000.

In some embodiments of the present application, the battery 1100 can not only serve as a power supply for operating the vehicle 1000, but can also serve as a power supply for driving the vehicle 1000, in place of or partially in place of fuel or natural gas, to provide driving power for the vehicle 1000.

Referring to FIG. 2, as an embodiment of the battery 1100, the battery 1100 includes a box 10 and battery cells 20, where the battery cells 20 are accommodated in the box 10. The box 10 is configured to provide an accommodating space for the battery cells 20. The box 10 may be of a variety of structures. In some embodiments, the box 10 may include a first part 11 and a second part 12, the first part 11 and the second part 12 cover each other, and the first part 11 and the second part 12 jointly define the accommodating space for accommodating the battery cells 20. The second part 12 may be a hollow structure being open on one side, the first part 11 may be a plate-like structure, and the first part 11 covers an open side of the second part 12, so that the first part 11 and the second part 12 jointly define the accommodating space. Alternatively, each of the first part 11 and the second part 12 may be a hollow structure being open on one side, and an open side of the first part 11 covers an open side of the second part 12. Certainly, the box 10 formed by the first part 11 and the second part 12 may be in various shapes, such as a cylinder, and a cuboid.

In the battery 1100, there may be a plurality of battery cells 20, and the plurality of battery cells 20 may be connected in series, parallel, or series-parallel. Series-parallel connection means that both series connection and parallel connection exist among the plurality of battery cells 20.

In an embodiment, the plurality of battery cells 20 may be directly connected in series, parallel, or series-parallel together, and then a whole formed by the plurality of battery cells 20 may be accommodated in the box 10. Certainly, the battery 1100 may also be in the form of a battery module formed by the plurality of battery cells 20 that are first connected in series, parallel, or series-parallel. A plurality of battery modules are then connected in series, parallel, or series-parallel to form a whole and accommodated in the box 10. The battery 1100 may alternatively be of another structure. For example, the battery 1100 may further include a busbar component, configured to implement electrical connection between the plurality of battery cells 20.

Each battery cell 20 may be a secondary battery or a primary battery; or may be a lithium-sulfur battery, a sodium-ion battery, or a magnesium-ion battery, but is not limited thereto. The battery cell 20 may be cylindrical, flat-shaped, cuboid-shaped, or in another shape.

As another embodiment of the battery 1100, the battery 1100 may not include the box 10. Instead, the plurality of battery cells 20 is electrically connected, and is integrated by using a necessary fixing structure and then assembled into a power consuming device.

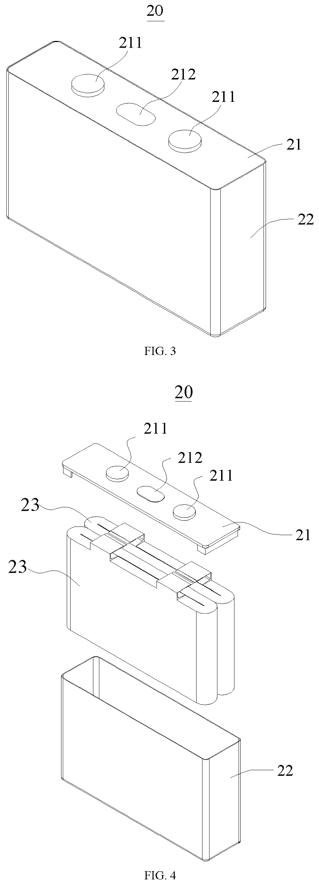

Referring to FIG. 3 and FIG. 4, the battery cell 20 is a smallest unit forming a battery. As shown in FIG. 3, the battery cell 20 includes an end cover 21, a shell 22, an electrode assembly 23, and other functional components.

The end cover 21 refers to a component that covers an opening of the shell 22 to isolate an internal environment of the battery cell 20 from an external environment. A shape of the end cover 21 is not limited and may be adapted to a shape of the shell 22 to fit the shell 22. Optionally, the end cover 21 may be made of a material with specified hardness and strength (for example, aluminum alloy), so that the end cover 21 is less likely to deform under extrusion and collision, enabling the battery cell 20 to have a higher structural strength and enhanced safety performance. A functional component such as the electrode terminal 211 may be disposed on the end cover 21. The electrode terminal 211 may be configured to electrically connect to the electrode assembly 23 to output or input electrical energy of the battery cell 20. In some embodiments, a pressure relief mechanism 212 configured to relieve internal pressure when the internal pressure or a temperature of the battery cell 20 reaches a threshold is further arranged on the end cover 21. The end cover 21 may also be made of various materials, such as copper, iron, aluminum, stainless steel, aluminum alloy, and plastic, which are not particularly limited in the embodiments of the present application. In some embodiments, an insulating member may also be arranged on an inner side of the end cover 21. The insulating member can be configured to isolate electrical connection members in the shell 22 from the end cover 21, reducing a short-circuit risk. For example, the insulating member may be made of plastic, rubber, or the like.

The shell 22 is an assembly configured to form an internal environment of the battery cells 20 together with the end cover 21, where the formed internal environment may be configured to accommodate the electrode assembly 23, an electrolyte, and other components. The shell 22 and the end cover 21 may be separate components, an opening may be provided in the shell 22, and the end cover 21 covers the opening to form the internal environment of the battery cell 20. Without limitation, the end cover 21 and the shell 22 may also be integrated. Specifically, the end cover 21 and the shell 22 may form a shared connection surface before other components are arranged inside the shell, and then the end cover 21 covers the shell 22 when inside of the shell 22 needs to be defined. The shell 22 may be of various shapes and sizes, such as a rectangular shape, a cylindrical shape, and a hexagonal prism shape. Specifically, the shape of the shell 22 may be determined based on a specific shape and size of an electrode assembly 23. The shell 22 may be made of various materials, such as copper, iron, aluminum, stainless steel, aluminum alloy, and plastic, which are not particularly limited in the embodiments of the present application.

The electrode assembly 23 is a component in the battery cell 20 that undergoes electrochemical reactions. The shell 22 may include one or more electrode assemblies 23. The electrode assembly 23 includes a positive electrode member, a negative electrode member, and an isolating member. During charge and discharge of the battery cell, active ions (for example, lithium ions) are intercalated and deintercalated back and forth between the positive electrode member and the negative electrode member. The isolating member is disposed between the positive electrode member and the negative electrode member, and may play a role in preventing a short circuit between the positive electrode member and the negative electrode member while allowing the active ions to pass through.

In some embodiments, the positive electrode member may be a positive electrode plate, and the positive electrode plate includes a positive electrode current collector and a positive electrode active material arranged on at least one surface of the positive electrode current collector.

In some embodiments, the negative electrode member may be a negative electrode plate, and the negative electrode plate includes a negative electrode current collector and a negative electrode active material arranged on at least one surface of the negative electrode current collector.

In some implementations, the isolating member is a separator. A type of the separator is not particularly limited in the present application, and any well-known separator with a porous structure having good chemical stability and mechanical stability may be selected.

In some implementations, the electrode assembly 23 is of a wound structure. The positive electrode plate and the negative electrode plate are wound into the wound structure.

In some implementations, the electrode assembly 23 is of a stacked structure.

In some implementations, a power distribution apparatus 100 may be configured to control electric energy allocation and management of the battery 1100 to the controller 1200 and the motor 1300, so as to assist in running of the vehicle 1000. The power distribution apparatus 100 may be further configured to control charge and discharge of the battery cell 20 in the battery 1100. The power distribution apparatus 100 may be mounted inside the box 10, or may be mounted outside the box 10.

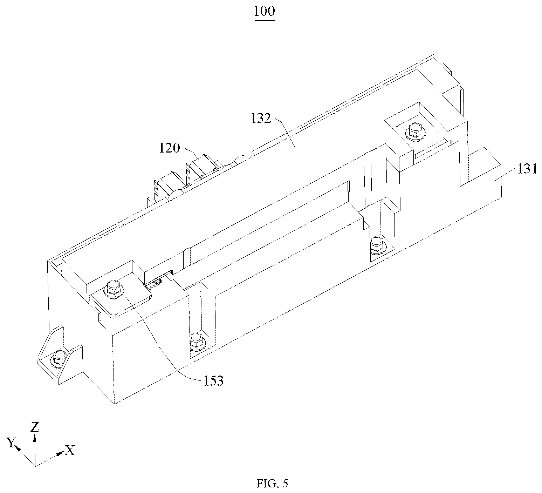

With reference to FIG. 5 to FIG. 8, in an embodiment of the present application, a power distribution apparatus 100 is provided. The power distribution apparatus 100 includes an electrical assembly 110. The electrical assembly 110 includes at least two electrical members 1101; among the at least two electrical members 1101, an electrical member 1101 having a maximum size in a first direction is a first electrical member 111; a size of the first electrical member 111 in the first direction is not greater than sizes of the first electrical member 111 in other directions; and a ratio of a size of the electrical assembly 110 in the first direction to the size of the first electrical member 111 in the first direction is M, where 1≤M≤1.2.

A plurality of electrical members 1101 are generally disposed in the power distribution apparatus 100. The plurality of electrical members 1101 form the electrical assembly 110. The electrical member 1101 may be, but is not limited to, a component such as a relay, a fuse, a resistor, and a current sensor. The first electrical member 111 may be an electrical member 1101 having a maximum size in the first direction in the power distribution apparatus 100, or may be an electrical module having a maximum size in the first direction in the power distribution apparatus 100. The electrical module may be a module formed by integrating the plurality of electrical members 1101 in the power distribution apparatus 100.

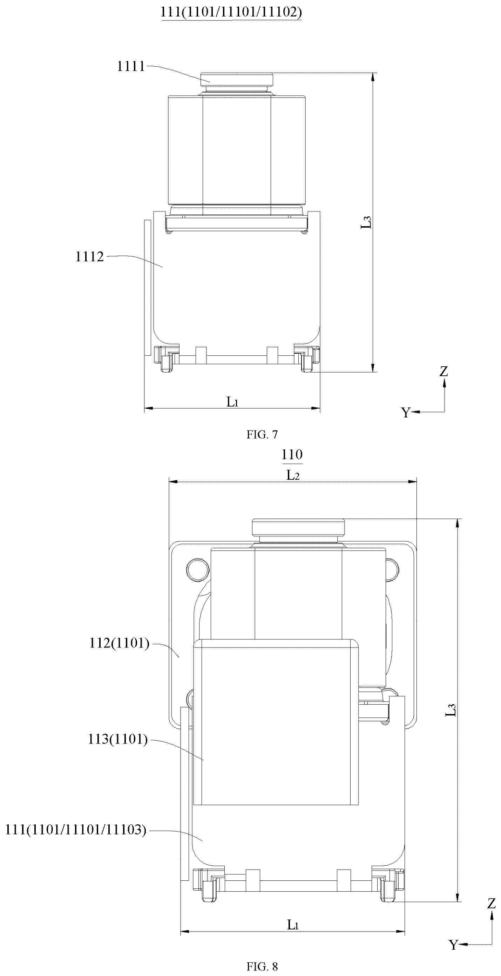

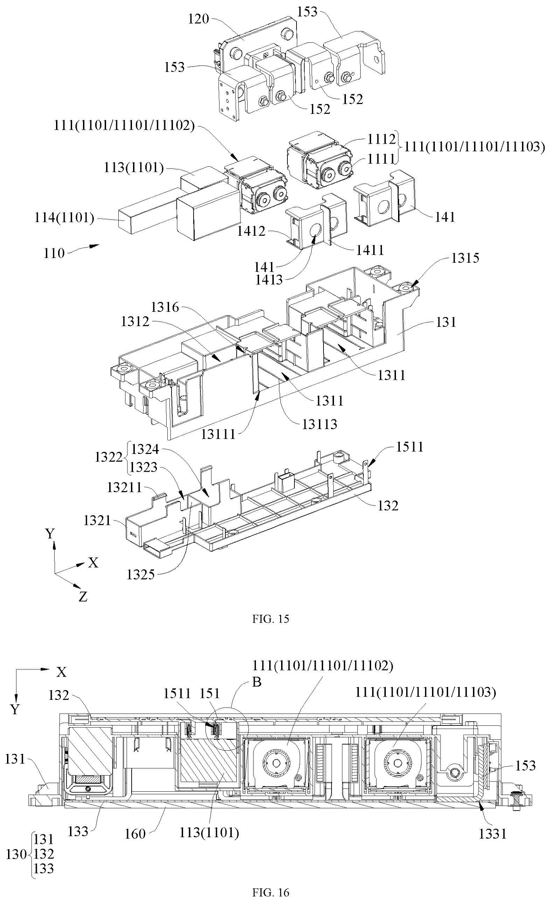

A plane parallel to the first direction is defined as a first auxiliary projection surface, the first electrical member 111 is orthographically projected on the first auxiliary projection surface to obtain a first projection pattern, the first direction is orthographically projected on the first auxiliary projection surface to obtain a first projection direction, the first projection pattern is orthographically projected in the first projection direction to obtain a first projection straight line, and a length of the first projection straight line may be a size of the first electrical member 111 in the first direction. For example, referring to FIG. 7, a size of the first electrical member 111 in a width direction is the smallest, and a size of the first electrical member 111 in the first direction may be a width L₁ of the first electrical member 111. Similarly, the electrical assembly 110 is orthographically projected on the first auxiliary projection surface to obtain a second projection pattern, the second projection pattern is orthographically projected in the first projection direction to obtain a second projection straight line, and a length of the second projection straight line may be a size of the electrical assembly 110 in the first direction. For example, referring to FIG. 8, a size of the electrical assembly 110 in the first direction may be a width L₂ of the electrical assembly 110. Alternatively, referring to FIG. 15, the size of the electrical assembly 110 in the first direction may be a height of the electrical assembly 110.

A ratio of a size of the electrical assembly 110 in the first direction to the size of the first electrical member 111 in the first direction is M, where 1≤M≤1.2. It may be understood that, M is the ratio of the size of the electrical assembly 110 in the first direction to the size of the first electrical member 111 in the first direction, where the ratio ranges from 1 to 1.2. When M = 1, the size of the first electrical member 111 in the first direction is equal to the size of the electrical assembly 110 in the first direction, that is, another electrical member 1101 of the electrical assembly 110 different from the first electrical member 111 does not protrude from a lateral portion of the first electrical member 111 in the first direction. When 1<M≤1.2, another electrical member 1101 of the electrical assembly 110 different from the first electrical member 111 protrudes from a lateral portion of the first electrical member 111 in the first direction and does not protrude much, so that the size of the first electrical member 111 in the first direction is less than the size of the electrical assembly 110 in the first direction, and the size of the first electrical member 111 in the first direction has a small difference from the size of the electrical assembly 110 in the first direction, that is, the size of the electrical assembly 110 in the first direction is mainly determined by the first electrical member 111.

A size of the first electrical member 111 in the first direction is not greater than sizes of the first electrical member 111 in other directions. It may be understood that, the size of the first electrical member 111 in the first direction is less than or equal to the sizes of the first electrical member 111 in the other directions, that is, the size of the first electrical member 111 in the first direction is a minimum size of the first electrical member 111. The other directions herein may refer to directions different from the first direction. Specifically, when the first electrical member 111 has different sizes in at least two directions, the size of the first electrical member 111 in the first direction may be less than the sizes of the first electrical member 111 in the other directions, or sizes of the first electrical member 111 in a plurality of directions are equal, and the sizes of the first electrical member 111 in these directions are less than sizes of the first electrical member 111 in other directions different from these directions, that is, the size of the first electrical member 111 in the first direction is equal to any one of the sizes of the first electrical member 111 in these directions, that is, the first electrical member 111 has a plurality of minimum size directions. When sizes of the first electrical member 111 in all directions are the same, the size of the first electrical member 111 in the first direction may refer to a size of the first electrical member 111 in any direction. For example, a shape of the first electrical member 111 is a round ball.

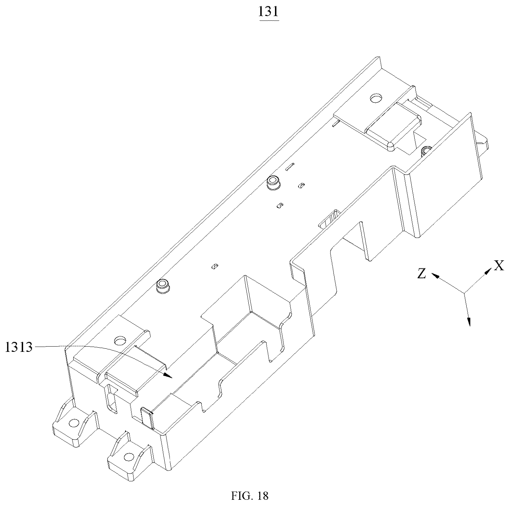

The first direction may be a minimum size direction of the first electrical member 111. For example, with reference to FIG. 5 to FIG. 18, for the first direction, refer to a direction Y in the figures. For a height direction of the first electrical member 111, refer to a direction Z in the accompanying drawings. For a width direction of the first electrical member 111, refer to a direction Y in the figures. For a length direction of the first electrical member 111, refer to a direction X in the figures. a size of the first electrical member 111 in a width direction is the smallest, and the first direction may refer to the width direction of the first electrical member 111.

In the power distribution apparatus 100 of this embodiment of the present application, the power distribution apparatus 100 includes an electrical assembly 110. The electrical assembly 110 includes at least two electrical members 1101; among the at least two electrical members 1101, an electrical member 1101 having a maximum size in a first direction is a first electrical member 111, that is, the first electrical member 111 is an electrical member 1101 having a maximum size in the first direction in the electrical assembly 110; and a ratio of a size of the electrical assembly 110 in the first direction to the size of the first electrical member 111 in the first direction is M, where 1≤M≤1.2. Therefore, the size of the power distribution apparatus 100 in the first direction is mainly determined by the size of the first electrical member 111 in the first direction, and in addition, the size of the first electrical member 111 in the first direction is not greater than the sizes of the first electrical member 111 in the other directions, that is, the size of the first electrical member 111 in the first direction is a minimum size of the first electrical member 111. In this way, the size of the power distribution apparatus 100 in the first direction may be small, and the size of the power distribution apparatus 100 in the first direction is not greater than the sizes of the power distribution apparatus 100 in the other directions, so that the entire power distribution apparatus 100 has a flat shape. In this case, when the size of the mounting space provided by the power consuming device and the battery 1100 in a preset direction is limited, the power distribution apparatus 100 may be mounted in the mounting space in a manner in which the first direction is parallel or nearly parallel to the preset direction, to reduce a space occupied by the power distribution apparatus 100 in the preset direction, thereby providing a larger mounting space for other components, reducing the arrangement difficulty of the other components, improving the structural compactness of the power consuming device and the battery 1100, facilitating improvement of the performance of the battery 1100 and the power consuming device, and reducing manufacturing costs of the power consuming device and the battery 1100.

In some batteries 1100, a mounting space provided by the battery 1100 is located on a lateral portion of a battery cell 20, and the mounting space is limited by a height direction of the battery cell 20. When the height of the battery cell 20 is small, the height of the mounting space provided by the battery 1100 is small. In this way, the first direction of the power distribution apparatus 100 may be disposed parallel or nearly parallel to the height direction of the battery cell 20, thereby reducing the space occupied by the power distribution apparatus 100 in the height direction of the battery cell 20; and a larger mounting space may also be provided for other components in the height direction of the battery cell 20, so as to facilitate arrangement of the other components, and reduce arrangement difficulty. This also helps improve structural compactness of the power consuming device and the battery 1100, improves performance of the battery and the power consuming device, and reduces manufacturing costs of the power consuming device and the battery 1100. When the height of the battery cell 20 is large, the first direction of the power distribution apparatus 100 may alternatively be disposed perpendicular or nearly perpendicular to the height direction of the battery cell 20, thereby reducing the space occupied by the power distribution apparatus 100 in the width or length direction of the battery cell 20; and a larger mounting space may also be provided for other components in the width or length direction of the battery cell 20, so as to facilitate arrangement of the other components, and reduce arrangement difficulty. This also helps improve structural compactness of the power consuming device and the battery 1100, and improves performance of the battery and the power consuming device. In some other batteries 1100, the power distribution apparatus 100 may alternatively be mounted on the top or the bottom of the battery cell 20, and the first direction is parallel to or nearly parallel to a height direction of the battery cell 1100, so as to reduce the space occupied by the power distribution apparatus 100 in the height direction of the battery cell 1100.

When the size of the mounting space provided by the battery 1100 in the length direction of the battery 1100 is limited, the first direction of the power distribution apparatus 100 may be disposed parallel or nearly parallel to the length direction of the battery 1100, so that the space occupied by the power distribution apparatus 100 in the length direction of the battery 1100 can be reduced, thereby providing a larger mounting space for other components in the length direction of the battery cell 20, so as to facilitate arrangement of the other components, and reduce arrangement difficulty. This also helps improve structural compactness of the power consuming device and the battery 1100, improves performance of the battery and the power consuming device, and reduces manufacturing costs of the power consuming device and the battery 1100. The power distribution apparatus 100 may be mounted on a lateral portion of the battery 1100 in the length direction, or the power distribution apparatus 100 may be mounted on the top and the bottom of the battery 1100, so as to reduce the space occupied by the power distribution apparatus 100 in the length direction of the battery 1100.

When the size of the mounting space provided by the battery 1100 in the width direction of the battery 1100 is limited, the first direction of the power distribution apparatus 100 may be disposed parallel or nearly parallel to the width direction of the battery 1100, so that the space occupied by the power distribution apparatus 100 in the width direction of the battery 1100 can be reduced, thereby providing a larger mounting space for other components in the width direction of the battery 1100, so as to facilitate arrangement of the other components, and reduce arrangement difficulty. This also helps improve structural compactness of the power consuming device and the battery 1100, improves performance of the battery and the power consuming device, and reduces manufacturing costs of the power consuming device and the battery 1100. The power distribution apparatus 100 may be mounted on a lateral portion of the battery 1100 in the width direction, or the power distribution apparatus 100 may be mounted on the top and the bottom of the battery 1100, so as to reduce the space occupied by the power distribution apparatus 100 in the width direction of the battery 1100.

In another embodiment of the present application, 1≤M≤1.1.

By using the technical solution of this embodiment, through a design in which 1≤M≤1.1, a difference between the size of the first electrical member 111 in the first direction and the size of the electrical assembly 110 in the first direction is smaller, so that the size of the electrical assembly 110 in the first direction is smaller, the mounting space required by the power distribution apparatus 100 in the first direction is smaller, and the overall structural compactness is also better, thereby improving the structural compactness of the power consuming device and the battery 1100, and improving the performance of the battery and the power consuming device.

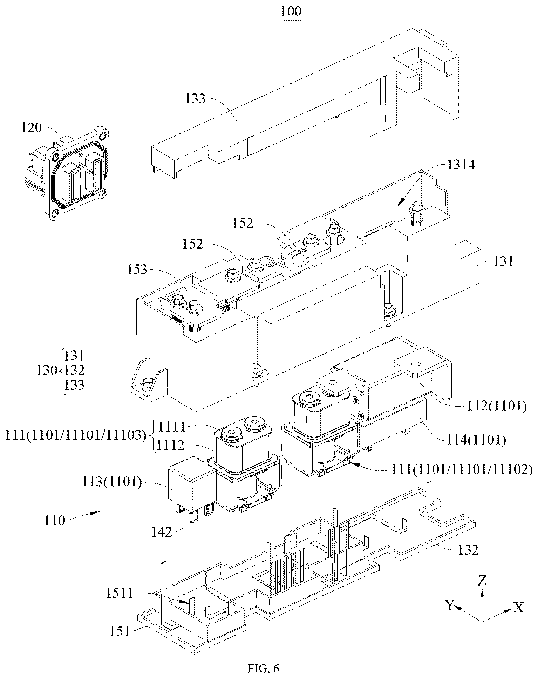

In another embodiment of the present application, with reference to FIG. 6 to FIG. 9, a ratio of a size of the electrical assembly 110 in a second direction to a size of the first electrical member 111 in the second direction is N, where 1≤N≤1.2, and the second direction intersects with the first direction.

The second direction may be a direction intersecting with the first direction, that is, the first direction is neither parallel to nor coincident with the second direction. For example, the first direction is perpendicular to the second direction. For the second direction, refer to the direction Z in FIG. 6 to FIG. 18.

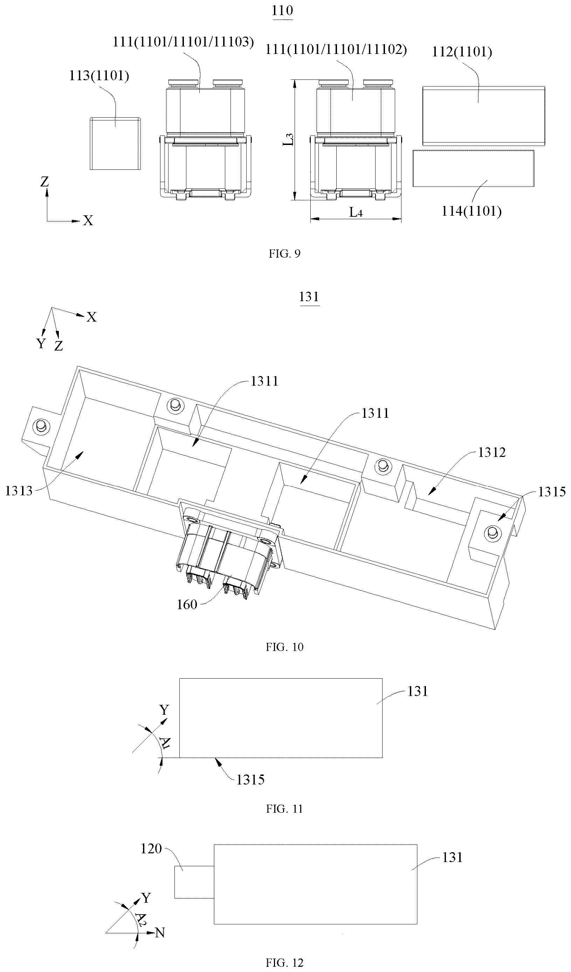

A plane parallel to the second direction is defined as a second auxiliary projection surface, the first electrical member 111 is orthographically projected on the second auxiliary projection surface to obtain a third projection pattern, the second direction is orthographically projected on the second auxiliary projection surface to obtain a second projection direction, the third projection pattern is orthographically projected in the second projection direction to obtain a third projection straight line, and a length of the third projection straight line may be a size of the first electrical member 111 in the second direction. For example, with reference to FIG. 8 and FIG. 9, a size of the first electrical member 111 in the second direction may be a height L₃ of the first electrical member 111. Similarly, the electrical assembly 110 is orthographically projected on the second auxiliary projection surface to obtain a fourth projection pattern, the fourth projection pattern is orthographically projected in the second projection direction to obtain a fourth projection straight line, and a length of the fourth projection straight line may be a size of the electrical assembly 110 in the second direction. For example, with reference to FIG. 9, a size of the electrical assembly 110 in a second direction is equal to a size of the first electrical member 111 in the second direction, that is, a size of the electrical assembly 110 in the second direction may be a height L₃ of the first electrical member 111.

a ratio of a size of the electrical assembly 110 in a second direction to a size of the first electrical member 111 in the second direction is N, where 1≤N≤1.2. It may be understood that, N is the ratio of the size of the electrical assembly 110 in the second direction to the size of the first electrical member 111 in the second direction, where the ratio ranges from 1 to 1.2. When N = 1, the size of the first electrical member 111 in the second direction is equal to the size of the electrical assembly 110 in the second direction, that is, another electrical member 1101 of the electrical assembly 110 different from the first electrical member 111 does not protrude from a lateral portion of the first electrical member 111 in the second direction. When 1<N≤1.2, another electrical member 1101 of the electrical assembly 110 different from the first electrical member 111 protrudes from a lateral portion of the first electrical member 111 in the second direction and does not protrude much, so that the size of the first electrical member 111 in the second direction is less than the size of the electrical assembly 110 in the second direction, and the size of the second electrical member 1101 in the second direction has a small difference from the size of the electrical assembly 110 in the second direction, that is, the size of the electrical assembly 110 in the second direction is mainly determined by the first electrical member 111.

By using the technical solution of this embodiment, the size of the entire electrical assembly 110 in the second direction may be determined by the size of the first electrical member 111 in the second direction. In this way, the entire power distribution apparatus 100 may have a small size in the second direction, and the sizes of the power distribution apparatus 100 in both the first direction and the second direction are small, so that the power distribution apparatus 100 may be mounted in a narrow space, thereby further improving space utilization, improving structural compactness and performance of the power consuming device and the battery 1100, and reducing manufacturing costs of the power consuming device and the battery 1100.

In an embodiment of the present application, with reference to FIG. 6 to FIG. 9, 1≤N≤1.1.

By using the technical solution of this embodiment, through a design in which 1≤N≤1.1, a difference between the size of the first electrical member 111 in the second direction and the size of the electrical assembly 110 in the second direction is smaller, and the size of the electrical assembly 110 in the second direction is smaller, so that the mounting space required by the power distribution apparatus 100 in the second direction is smaller, and the overall structural compactness is also better, thereby improving the structural compactness of the power consuming device and the battery 1100, and improving the performance of the battery and the power consuming device.

In an embodiment of the present application, with reference to FIG. 6 to FIG. 9, the size of the first electrical member 111 in the second direction is not less than sizes of the first electrical member 111 in other directions.

It may be understood that, the second direction may be a maximum size direction of the first electrical member 111. Specifically, when the first electrical member 111 has different sizes in at least two directions, the size of the first electrical member 111 in the second direction may be greater than the sizes of the first electrical member 111 in the other directions, or sizes of the first electrical member 111 in a plurality of directions are equal, and the sizes of the first electrical member 111 in these directions are greater than sizes of the first electrical member 111 in other directions different from these directions, that is, the size of the first electrical member 111 in the second direction is equal to any one of the sizes of the first electrical member 111 in these directions, that is, the first electrical member 111 has a plurality of maximum size directions. When sizes of the first electrical member 111 in all directions are the same, the size of the first electrical member 111 in the second direction may refer to a size of the first electrical member 111 in any direction. For example, a shape of the first electrical member 111 is a round ball. The other directions herein may refer to all directions different from the second direction. The second direction may be a maximum size direction of the first electrical member 111. For example, with reference to FIG. 5 to FIG. 18, the second direction may refer to the height direction of the first electrical member 111.

By using the technical solution of this embodiment, the second direction is a maximum size direction of the first electrical member 111. In this way, a large mounting space may be provided for electrical members 1101 different from the first electrical member 111 in the second direction, and stacked arrangement of the electrical members 1101 different from the first electrical member 111 in the second direction is also facilitated, so as to reduce a size of the power distribution apparatus 100 in a direction different from the first direction and the second direction of the first electrical member 111. The structural compactness of the power distribution apparatus 100 is good, and the outline size of the power distribution apparatus 100 is smaller, to help improve space utilization, improve structural compactness and performance of the power consuming device and the battery 1100, and reduce manufacturing costs of the power consuming device and the battery 1100.

In an embodiment of the present application, with reference to FIG. 6 to FIG. 9, a plurality of first electrical members 111 are provided, the plurality of first electrical members 111 are arranged in a third direction, the third direction is perpendicular to the first direction, and the third direction is perpendicular to the second direction.

The third direction may be a direction perpendicular to the second direction and the third direction. The plurality of first electrical members 111 is arranged in the third direction. The third direction may refer to the direction X in FIG. 5 to FIG. 18, and may also refer to a length direction of the first electrical member 111.

By using the technical solution of this embodiment, a plurality of first electrical members 111 may be arranged in the third direction, and both the first direction and the second direction are perpendicular to the third direction. In this way, space occupation of the plurality of first electrical members 111 in the first direction and the second direction may be reduced. The entire power distribution apparatus 100 is long-strip-shaped, and the structure of the power distribution apparatus 100 is more compact. In addition, the long-strip-shaped power distribution apparatus 100 can also better use the narrow space in the power consuming device and the battery 1100, entire space utilization of the power consuming device and the battery 1100 is high, and structural compactness of the power consuming device and the battery 1100 is good, to help improve performance of the power consuming device and the battery 1100, and also help reduce manufacturing costs of the power consuming device and the battery 1100.

In another embodiment of the present application, with reference to FIG. 6 and FIG. 10, the power distribution apparatus 100 further includes a mounting base 131, and the first electrical member 111 is mounted on the mounting base 131; and an overall size of the first electrical member 111 plus the mounting base 131 in the first direction is less than sizes of the power distribution apparatus 100 in other directions.

The mounting base 131 may be a mounting base body of the first electrical member 111, and plays a role in supporting the first electrical member 111. Certainly, other electrical members different from the first electrical member 111 of the electrical assembly 110 may also be mounted on the mounting base 131.

The overall size of the first electrical member 111 plus the mounting base 131 in the first direction may be understood as a size of an integral part in the first direction that is formed after the first electrical member 111 is mounted on the mounting base 131.

The sizes of the power distribution apparatus 100 in the other directions may be understood as sizes of the power distribution apparatus 100 in the other directions different from the first direction.

That the overall size of the first electrical member 111 plus the mounting base 131 in the first direction is not greater than the sizes of the power distribution apparatus 100 in the other directions may be understood as that the overall size of the first electrical member 111 plus the mounting base 131 in the first direction is less than or equal to the sizes of the power distribution apparatus 100 in the other directions. That is, the overall size of the first electrical member 111 plus the mounting base 131 in the first direction is a minimum size of the power distribution apparatus 100. The first direction is a minimum size direction of the power distribution apparatus 100, so that the power distribution apparatus 100 has a flat shape. The other directions herein may refer to directions different from the first direction.

It should be noted that, after the arrangement of the electrical members 1101 is determined, the size of the mounting base 131 is designed according to a mounting requirement and a use requirement of the power distribution apparatus 100 and the arrangement of the electrical members 1101. The size of the mounting base 131 matches an overall size of the electrical members 1101 after being arranged, so that the mounting base 131 has small impact on an entire outline size percentage of the power distribution apparatus 100, and the power distribution apparatus 100 has a flat shape. Specifically, the mounting base 131 may be a plate, and each electrical member 1101 is mounted on the plate. Usually, a size of a plate surface of the plate matches a projection range of the electrical assembly 110 on the plate surface, and the plate usually has a small thickness, so that the entire power distribution apparatus 100 can still have a flat shape. The mounting base 131 may alternatively be in the shape of a shell, and an inner cavity of the shell-shaped mounting base 131 is used for accommodating the electrical assembly 110. In this way, a shell structure wrapping the electrical assembly 110 may be adaptively designed. The shell structure is the shell-shaped mounting base 131, and an outline size of the mounting base 131 matches an outline size of the electrical assembly 110, so that the entire power distribution apparatus 100 still has a flat shape. The mounting base 131 is made of an insulating material, for example, insulating plastic such as polypropylene (PP), polyethylene (PE), or polyvinylchlorid (PVC), so as to play a role in insulating and protecting the electrical assembly 110.

By using the technical solution of this embodiment, the entire power distribution apparatus 100 still has a flat shape, and the space occupied by the power distribution apparatus 100 in the preset direction can be reduced, thereby helping improve the structural compactness of the power consuming device and the battery 1100, and improve the performance of the battery and the power consuming device.

In an actual application process, mounting surfaces are usually disposed in the power consuming device and the battery 1100. The mounting surfaces are used for mounting the mounting base 131, and positions of the mounting surfaces are relatively fixed. In this case, for the power distribution apparatus 100, the outline size of the power distribution apparatus 100 needs to be designed according to the positions of the mounting surfaces and a size of a mounting space provided on the mounting surfaces, so as to improve space utilization, improve performance, and reduce costs.

In another embodiment of the present application, with reference to FIG. 11, the mounting base 131 has an outer interface 1315, the outer interface 1315 forms a first preset angle with the first direction, and the first preset angle is A₁, where 0°≤A₁≤45°.

The outer interface 1315 may be a surface of the mounting base 131 connected to or in contact with a mounting surface. It should be noted that, the shape of the mounting base 131 shown in FIG. 11 is for ease of illustration and does not represent an actual shape, and a specific shape thereof may be designed according to an actual requirement.

That the outer interface 1315 forms the first preset angle with the first direction may be understood as that, an angle may be formed between the first direction and the outer interface 1315. However, two angles are usually formed between the first direction and the outer interface 1315, the two angles are complementary angles, the first preset angle may refer to a smaller one of the two angles, and the smaller angle is A₁. Specifically, the outer interface 1315 may be a surface of the mounting base 131 that forms the first preset angle with the first direction. The outer interface 1315 on the mounting base 131 may be determined according to the first direction, and the angle between the mounting base and a preset direction of the mounting space, so that after the power distribution apparatus 100 is mounted in the mounting space, a space occupied by the power distribution apparatus 100 in the preset direction is small, to facilitate arrangement of other components.

By using the technical solution of this embodiment, through a design in which 0°≤A₁≤45°, an inclined angle of the minimum size direction of the entire power distribution apparatus 100 relative to the outer interface 1315 is small. In this way, the power distribution apparatus 100 may be mounted in some mounting spaces in which the inclined angle of the minimum size direction relative to the mounting surface is small, thereby fully using the space in the battery 1100 and the space in the power consuming device, and further improving space utilization.

In another embodiment of the present application, with reference to FIG. 11, 0°≤A₁≤10°.

By using the technical solution of this embodiment, through a design in which 0°≤A₁≤10°, the minimum size direction of the entire power distribution apparatus 100 is parallel or nearly parallel to the outer interface 1315. In this way, in an actual use process, the power distribution apparatus 100 is mounted in some mounting spaces in which the minimum size direction is parallel or nearly parallel to the mounting surface, thereby fully using the space in the battery 1100 and the space in the power consuming device, and further improving space utilization.

In an embodiment, a value of A₁ may be, but is not limited to, 0°, 2°, 4°, 8°, 10°, 12°, 14°, 16°, 18°, 20°, 22°, 24°, 26°, 28°, 30°, 32°, 34°, 36°, 38°, 40°, 42°, 44°, or 45°.

In an embodiment, with reference to FIG. 5 to FIG. 10, the first direction is parallel to the width direction of the first electrical member 111, a bottom surface or a top surface of the mounting base 131 is the outer interface 1315, and the width direction of the first electrical member 111 is parallel to the outer interface 1315, that is, a value of A₁ is 0°; During actual application to the battery 1100, if the height of the battery cell 20 is large, the top surface or the bottom surface of the mounting base 131 may be used as the outer interface 1315. After the outer interface 1315 is mounted on the mounting surface, the first electrical member 111 has a vertical shape, and the width direction of the power distribution apparatus 100 is parallel or nearly parallel to the width direction or the length direction of the battery cell 20, so that when the power distribution apparatus 100 satisfies a mounting requirement in the height direction of the battery cell 20, the space occupied by the power distribution apparatus 100 in the width direction or the length direction of the battery cell 20 can be reduced, to facilitate distribution of other components. Herein, for the height direction of the power distribution apparatus 100, refer to the direction Z in FIG. 5 to 10, and for the width direction of the power distribution apparatus 100, refer to the direction Y in FIG. 5 to 10.

In another embodiment of the present application, with reference to FIG. 11, the mounting base 131 has an outer interface 1315, the outer interface 1315 forms a first preset angle with the first direction, and the first preset angle is A₁, where 45°<A₁≤90°.

By using the technical solution of this embodiment, through a design in which 45°<A₁≤90°, an inclined angle of the minimum size direction of the entire power distribution apparatus 100 relative to the outer interface 1315 is large. In this way, in an actual use process, the power distribution apparatus 100 is mounted in some spaces in which the inclined angle of the minimum size direction relative to the mounting surface is large, thereby fully using the mounting space in the battery 1100 and the space in the power consuming device, and further improving space utilization.

In another embodiment of the present application, with reference to FIG. 11, 80°≤A₁≤90°.

By using the technical solution of this embodiment, through a design in which 80°≤A₁≤90°, the minimum size direction of the entire power distribution apparatus 100 is perpendicular or nearly perpendicular to the outer interface 1315. In this way, the power distribution apparatus 100 may be mounted in some mounting spaces in which the minimum size direction is perpendicular or nearly perpendicular to the mounting surface, thereby fully using the space in the battery 1100 and the space in the power consuming device, and further improving space utilization.

In an embodiment, a value of A₁ may be, but is not limited to, 45.1°, 47°, 49°, 51°, 53°, 55°, 57°, 59°, 61°, 63°, 65°, 67°, 69°, 71°, 73°, 75°, 77°, 79°, 80°, 82°, 84°, 86°, 88°, or 90°.

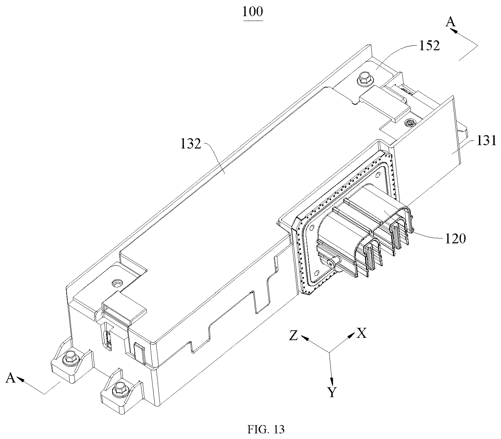

In an embodiment, with reference to FIG. 13 to FIG. 15, the first direction is parallel to the width direction of the first electrical member 111, a side surface of the mounting base 131 in the direction Y is the outer interface 1315, and the width direction of the first electrical member 111 is perpendicular to the outer interface 1315, that is, a value of A₁ is 90°; In addition, during actual application to the battery 1100, if the height of the battery cell 20 is small, the side surface of the mounting base 131 in the direction Y may be used as the outer interface 1315. In this way, after the outer interface 1315 is mounted on the mounting surface, the first electrical member 111 has a horizontal shape, and the height direction of the power distribution apparatus 100 is parallel or nearly parallel to the height direction of the battery cell 20, thereby reducing the space occupied by the power distribution apparatus 100 in the height direction of the battery cell 20, to facilitate distribution of other components. Herein, for the height direction of the power distribution apparatus 100, refer to the direction Y in FIG. 13 to 15, and for the width direction of the power distribution apparatus 100, refer to the direction Z in FIG. 13 to 15.

In another embodiment of the present application, with reference to FIG. 5 and FIG. 6, the power distribution apparatus 100 further includes a connector 120 configured to electrically connect the electrical member 1101 and an external component, and the connector 120 is mounted on the mounting base 131.

The connector 120 may refer to a component that is electrically connected to an external component and that is of the power distribution apparatus 100. The connector 120 electrically connects the electrical member 1101 in the power distribution apparatus 100 to an external component, and may also implement a power distribution function of the power distribution apparatus 100. For example, the connector 120 may be a charging interface of the battery 1100, or may be an interface connected to a power consuming part such as the motor 1300 or the controller 1200 in the power consuming device. Therefore, the corresponding external component may be a charging plug, to charge the battery 1100; or may be a power consuming part such as the motor 1300 or the controller 1200 in the power consuming device.

The connector 120 is mounted on the mounting base 131. It may be understood that, the connector 120 is connected to the mounting base 131, and the mounting base 131 plays a role in supporting the connector 120. The connector 120 may be fixed to the mounting base 131 in a manner such as snap-fit, screwing, or integral forming. The integral forming includes, but is not limited to, a manner such as integral injection molding or integral cutting.

In the electrical assembly 110, a part of the electrical members 1101 may be electrically connected to the connector 120, or all of the electrical members 1101 may be electrically connected to the connector 120. The electrical member 1101 may be electrically connected to the connector 120 by using an electrically conductive member such as a wire or a copper bar.

By using the technical solution of this embodiment, the connector 120 is directly integrated into the power distribution apparatus 100, and the power distribution apparatus 100 has a high integration degree, to help improve performance, reduce costs, and also facilitate connection of the power distribution apparatus 100 to the external component.

In some actual application processes, a mounting position and a mounting manner of the connector 120 in the power consuming device or the battery 1100 are relatively fixed, so that a plugging direction of the connector 120 is also relatively fixed. In this way, the outline size of the power distribution apparatus 100 may be designed according to the plugging direction of the connector 120 and a size of the mounting space provided at the position of the connector 120, so as to improve space utilization, improve performance, and reduce costs.

In another embodiment of the present application, with reference to FIG. 12, the plugging direction of the connector 120 forms a second preset angle with the first direction, and the second preset angle is A₂, where 0°≤A₂≤45°.

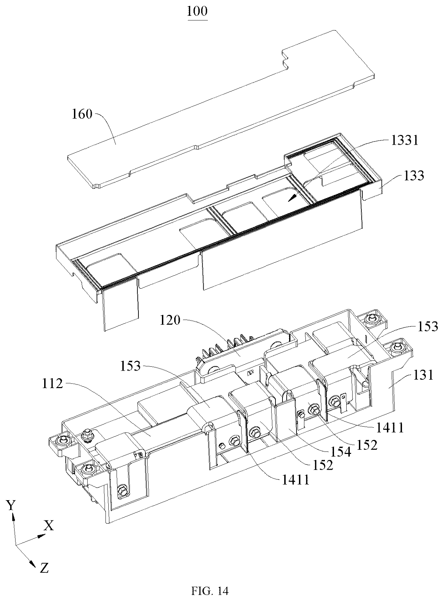

The connector 120 is usually provided with a plug for cooperatively plugging with the connector, so as to implement electrical conduction of a circuit. A direction in which the connector 120 is inserted into the plug is the plugging direction of the connector 120. For example, for the plugging direction of the connector 120, refer to a direction indicated by an arrow N in FIG. 12; or for the plugging direction of the connector 120, refer to the direction Y in FIG. 10; or for the plugging direction of the connector 120, refer to the direction Z in FIG. 14; It should be noted that, the shape of the mounting base 131 shown in FIG. 12 is for ease of illustration and does not represent an actual shape, and a specific shape thereof may be designed according to an actual requirement.

That the plugging direction of the connector 120 forms a second preset angle with the first direction may be understood as that, an angle may be formed between the first direction and the plugging direction of the connector 120. However, two angles are usually formed between the first direction and the plugging direction of the connector 120, the second preset angle may refer to a smaller one of the two angles, and the smaller angle is A₂. Specifically, the mounting angle of the power distribution apparatus 100 may be determined according to the angle between the plugging direction of the connector 120 and the preset direction of the mounting space, so as to reduce a space occupied by the power distribution apparatus 100 in the preset direction, to facilitate arrangement of other components.

By using the technical solution of this embodiment, through a design in which 0°≤A₂≤45°, the minimum size direction of the entire power distribution apparatus 100 relative to the plugging direction of the connector 120 is small. In this way, the power distribution apparatus 100 may be mounted in some mounting spaces in which the inclined angle of the minimum size direction relative to the plugging direction of the connector 120 is small, thereby fully using the space in the battery 1100 and the space in the power consuming device, and further improving space utilization.

In another embodiment of the present application, 0°≤A₂≤10°.

By using the technical solution of this embodiment, through a design in which 0°≤A₂≤10°, an inclined angle of the minimum size direction of the entire power distribution apparatus 100 is parallel or nearly parallel to the plugging direction of the connector 120. In this way, in an actual use process, the power distribution apparatus 100 is mounted in some mounting spaces in which the minimum size direction is parallel or nearly parallel to the plugging direction of the connector 120, thereby fully using the space in the battery 1100 and the space in the power consuming device, and further improving space utilization.

In an embodiment, a value of A₂ may be, but is not limited to, 0°, 2°, 4°, 8°, 10°, 12°, 14°, 16°, 18°, 20°, 22°, 24°, 26°, 28°, 30°, 32°, 34°, 36°, 38°, 40°, 42°, 44°, or 45°.

In an embodiment, with reference to FIG. 5 to FIG. 10, the width direction of the first electrical member 111 is parallel to the plugging direction of the connector 120, and the first direction is parallel to the plugging direction of the connector 120, that is, a value of A₂ is 0°. During actual application to the battery 1100, if the height of the battery cell 20 is large, the connector 120 may be mounted on a front lateral portion or a rear lateral portion of the mounting base 131. After the power distribution apparatus 100 is mounted in the mounting space, the first electrical member 111 has a vertical shape, and the width direction of the power distribution apparatus 100 is parallel or nearly parallel to the width direction or the length direction of the battery cell 20, so that when the power distribution apparatus 100 satisfies a mounting requirement in the height direction of the battery cell 20, the space occupied by the power distribution apparatus 100 in the width direction or the length direction of the battery cell 20 can be reduced, to facilitate distribution of other components. Herein, for the height direction of the power distribution apparatus 100, refer to the direction Z in FIG. 5 to 10, and for the width direction of the power distribution apparatus 100, refer to the direction Y in FIG. 5 to 10.

In another embodiment of the present application, with reference to FIG. 12, the plugging direction of the connector 120 forms a second preset angle with the first direction, and the second preset angle is A₂, where 45°<A₂≤90°.

By using the technical solution of this embodiment, through a design in which 45°<A₂≤90°, an inclined angle of the minimum size direction of the entire power distribution apparatus 100 relative to the plugging direction of the connector 120 is large. In this way, in an actual use process, the power distribution apparatus 100 is mounted in some spaces in which the inclined angle of the minimum size direction relative to the plugging direction of the connector 120 is large, thereby fully using the mounting space in the battery 1100 and the space in the power consuming device, and further improving space utilization.

In another embodiment of the present application, 80°≤A₂≤90°.

By using the technical solution of this embodiment, through a design in which 80°≤A₂≤90°, an inclined angle of the minimum size direction of the entire power distribution apparatus 100 is perpendicular or nearly perpendicular to the plugging direction of the connector 120. In this way, the power distribution apparatus 100 may be mounted in some mounting spaces in which the minimum size direction is nearly perpendicular or nearly perpendicular to the plugging direction of the connector 120, thereby fully using the space in the battery 1100 and the space in the power consuming device, and improving space utilization.

In an embodiment, a value of A₂ may be, but is not limited to, 45.1°, 47°, 49°, 51°, 53°, 55°, 57°, 59°, 61°, 63°, 65°, 67°, 69°, 71°, 73°, 75°, 77°, 79°, 80°, 82°, 84°, 86°, 88°, or 90°.

In an embodiment, with reference to FIG. 13 to FIG. 15, the width direction of the first electrical member 111 is perpendicular to the plugging direction of the connector 120, and the first direction is perpendicular to the plugging direction of the connector 120, that is, a value of A₂ is 90°. During actual application to the battery 1100, if the height of the battery cell 20 is small, the connector 120 may be mounted on a lateral portion of the mounting base 131 in the direction Z. After the power distribution apparatus 100 is mounted in the mounting space, the first electrical member 111 has a horizontal shape, and the height direction of the power distribution apparatus 100 is parallel or nearly parallel to the height direction of the battery cell 20, thereby reducing the space occupied by the power distribution apparatus 100 in the height direction of the battery cell 20, to facilitate distribution of other components. Herein, for the height direction of the power distribution apparatus 100, refer to the direction Y in FIG. 13 to 15, and for the width direction of the power distribution apparatus 100, refer to the direction Z in FIG. 13 to 15.

In another embodiment of the present application, with reference to FIG. 7 to FIG. 9, the first electrical member 111 is an electrical member 1101 having a largest outline size.

The electrical member 1101 generally has a length, a width, and a height. The outline size of the electrical member 1101 may refer to a value obtained by multiplying the length, the height, and the height of the electrical member 1101. An electrical member 1101 having a largest value may refer to an electrical member 1101 having a largest outline size. For example, the outline size of the first electrical member 111 is L, where L = L₁ * L₃ * L₄.

By using the technical solution of this embodiment, the outline size of the first electrical member 111 is the largest, and generally, the direction of the minimum size of the first electrical member 111 is also greater than the minimum sizes of most other electrical members 1101 in the power distribution apparatus 100. Therefore, when the electrical members 1101 are arranged, the other electrical members 1101 in the power distribution apparatus 100 do not protrude from the lateral portion of the first electrical member 111 in the first direction, or a part that projects from the lateral portion of the first electrical member 111 in the first direction is small, so that the size of the entire electrical assembly 110 in the first direction is small, and the electrical assembly 110 is flattened, to also help improve the structural compactness of the power distribution apparatus 100, and help improve the performance of the power consuming device and the battery 1100.

In another embodiment of the present application, the first electrical member 111 is a fuse, a resistor, a relay 11101, or a current sensor.

The fuse may be an electrical member 1101 that cuts off a current by blowing when the current unusually rises to a preset value in a circuit. The fuse plays a role in protecting the safe running of the circuit.

The resistor may refer to an electrical member 1101 that is in the circuit and that has a particular resistance to flow of the current.

The relay 11101 may be an electrical member 1101 configured to control on/off of the circuit. Specifically, the relay 11101 includes components such as an electromagnet, a coil, and a contact. When an input amount (such as a voltage, a current, or a temperature) of the input coil reaches a specified value, the electromagnet moves under magnetic force of the coil, and the movement of the electromagnet drives the contact to move, thereby changing an on state or an off state of the controlled circuit.

The current sensor may refer to a detection apparatus, which can sense information about a measured current, and can convert, according to a rule, the sensed information into an electric signal that satisfies a standard requirement or an information output in another required form, so as to satisfy requirements such as information transmission, processing, storage, display, recording, and control.

Generally, models of the electrical members 1101 are different, and outline sizes of the electrical members 1101 are also different. Different power distribution apparatuses 100 need to be formed by using electrical members 1101 of different models, so as to satisfy different performance requirements.

By using the technical solution of this embodiment, a fuse, a resistor, a relay, or a current sensor in the power distribution apparatus 100 may be flexibly selected as the first electrical member 111 according to an outline size of the fuse, the resistor, the relay, or the current sensor, so that different types of power distribution apparatuses 100 are flattened, and structural compactness of the different types of power distribution apparatuses 100 is improved.

In another embodiment of the present application, with reference to FIG. 6 to FIG. 10, when the first electrical member 111 is a relay 11101, the relay 11101 includes a switching unit 1112, the mounting base 131 is constructed with a first accommodating cavity 1311, and the switching unit 1112 is exposed in the first accommodating cavity 1311.

The relay 11101 in the power distribution apparatus 100 is used as the first electrical member 111, and a minimum size direction of the relay 11101 is used as the first direction. Generally, the outline size of the relay 11101 is the largest, and generally, the direction of the minimum size of the relay 11101 is also greater than the minimum sizes of most other electrical members 1101 in the power distribution apparatus 100. Therefore, when the electrical members 1101 are arranged, the other electrical members 1101 in the power distribution apparatus 100 do not protrude from the lateral portion of the relay 11101 in the first direction, or a part that projects from the lateral portion of the relay 11101 in the first direction is small, so that the size of the entire electrical assembly 110 in the first direction is small, and the electrical assembly 110 is flattened, to also help improve the structural compactness of the power distribution apparatus 100, and help improve the performance of the power consuming device and the battery 1100.

The first accommodating cavity 1311 may be a cavity of the mounting base 131 that is configured to accommodate the switching unit 1112. The switching unit 1112 may be a main component that is in the relay 11101 and that performs switching control, that is, a unit including the components such as the electromagnet, the coil, and the contact in the relay 11101 from which the shell 22 is removed.

That the switching unit 1112 is exposed in the first accommodating cavity 1311 may be understood as that, the switching unit 1112 is not covered with the shell 22, but is directly exposed in the first accommodating cavity 1311. That is, a cavity wall of the first accommodating cavity 1311 may be directly used as the shell 22 of the first relay 11101. That is, the first electrical member 111 is the relay 11101 from which the shell 22 is removed. That is, the mounting base 131 and the shell 22 of the relay 11101 are integrated to form an integrated structure, which helps reduce manufacturing costs.

By using the technical solution of this embodiment, the switching unit 1112 of the relay 11101 is directly exposed in the first accommodating cavity 1311. In this way, in the power distribution apparatus 100, a space occupied by the shell 22 of the relay 11101 may be saved, thereby improving structural compactness of the power distribution apparatus 100, and helping improve performance of the power distribution apparatus 100 and reduce manufacturing costs. In addition, the relay 11101 is generally a component with a large volume in the power distribution apparatus 100, and the shell 22 of the relay 11101 is omitted, so that a large space can be saved for the power distribution apparatus 100, thereby effectively improving the structural compactness of the power distribution apparatus 100.

In another embodiment of the present application, with reference to FIG. 15 to FIG. 17, a first gap 13112 is formed between at least one outer wall surface of the switching unit 1112 and a cavity wall surface corresponding to the first accommodating cavity 1311, and at least one first gap 13112 is filled with a structural adhesive.

It may be understood that, a first gap 13112 is formed between an outer wall surface of the switching unit 1112 and a cavity wall surface of the accommodating cavity that are disposed opposite to each other. There may be one, two, or three or more first gaps 13112. For example, with reference to FIG. 15, a bottom wall surface of the switching unit 1112 and a bottom cavity wall surface of the first accommodating cavity 1311 are disposed at an interval and define a first gap 13112, a front wall surface of the switching unit 1112 and a front cavity wall surface of the first accommodating cavity 1311 are disposed at an interval and define a first gap 13112, a rear wall surface of the switching unit 1112 and a rear cavity wall surface of the first accommodating cavity 1311 are disposed at an interval and define a first gap 13112, a left wall surface of the switching unit 1112 and a left cavity wall surface of the first accommodating cavity 1311 are disposed at an interval and define a first gap 13112, and a right wall surface of the switching unit 1112 and a right cavity wall surface of the first accommodating cavity 1311 are disposed at an interval and define a first gap 13112.

The structural adhesive may be a binder used for bonding the switching unit 1112 and the mounting base 131. The structural adhesive fills the first gap 13112, to bond the outer wall surface of the switching unit 1112 and the cavity wall of the first accommodating cavity 1311, thereby fixing the switching unit 1112 in the first accommodating cavity 1311. The structural adhesive may be, but is not limited to, an epoxy structural adhesive or an acrylic structural adhesive. There may be one, two, or three or more filled with the structural adhesive.

By using the technical solution of this embodiment, the switching unit 1112 is bonded in the first accommodating cavity 1311 by using the structural adhesive, and an assembly material of the relay 11101 and the mounting base 131 is simple, which helps improve the production efficiency of the power distribution apparatus 100.

In another embodiment of the present application, with reference to FIG. 15 to FIG. 17, at least one cavity wall surface of the first accommodating cavity 1311 is provided with a rib 13113, and the rib 13113 is configured to butt against the outer wall surface of the switching unit 1112.

The rib 13113 may be a protrusion structure on a cavity wall surface of the first accommodating cavity 1311, and there may be one, two, three, or more cavity walls on each of which a rib 13113 is formed.

That the rib 13113 butts against the outer wall surface of the switching unit 1112 may be understood as that, a surface of the rib 13113 that faces away from the cavity wall surface of the first accommodating cavity 1311 butts against an outer wall surface of the switching unit 1112, so that a gap is formed between the outer wall surface of the switching unit 1112 and the cavity wall surface of the first accommodating cavity 1311. The gap is a first gap 13112.

By using the technical solution of this embodiment, the switching unit 1112 may be positioned by butting against the rib 13113 by the switching unit 1112. In addition, a spacing of the first gap 13112 may be further limited, to facilitate subsequent filling of the structural adhesive.

In another embodiment of the present application, with reference to FIG. 15 to FIG. 17, the relay further 11101 includes a connection terminal 1111 configured to electrically connect to another electrical member 1101, the switching unit 1112 is connected to the connection terminal 1111, the first accommodating cavity 1311 has a first opening 13111, and the connection terminal 1111 protrudes from the first opening 13111.

The connection terminal 1111 may be a terminal that is of the relay 11101 and that is configured to electrically connect to the another electrical member 1101, the connection terminal 1111 is disposed outside the switching unit 1112, and the switching unit 1112 is electrically connected to the another electrical member 1101 by using the connection terminal 1111. For example, the connection terminal 1111 may be a terminal led out from the contact of the relay 11101.

The first opening 13111 may be an opening that is on the mounting base 131 and that communicates with the first accommodating cavity 1311, and the connection terminal 1111 extends out of the first opening 13111.

By using the technical solution of this embodiment, the connection terminal 1111 protrudes from the first opening 13111, that is, a part of the connection terminal 1111 that protrudes from the first opening 13111 is exposed out of the first accommodating cavity 1311, so that it may be convenient to electrically connect the connection terminal to another electrical member 1101.

In another embodiment of the present application, with reference to FIG. 14 or FIG. 15, the power distribution apparatus 100 further includes an insulating covering member 141, the insulating covering member 141 covers the first opening 13111, the insulating covering member 141 is provided with a through-going hole 1413, and the connection terminal 1111 goes through the through-going hole 1413, to expose the connection terminal 1111 out of the mounting base 131.

The insulating covering member 141 may be an isolating component covering the first opening 13111. The insulating covering member 141 is inserted into the first accommodating cavity 1311 from the first opening 13111 and seals the first opening 13111, so that the switching unit 1112 is isolated from the external environment, thereby insulating and protecting the relay 11101, to improve the use reliability of the power distribution apparatus 100. The insulating covering member 141 is made of an insulating material, for example, insulating plastic such as polypropylene (PP), polyethylene (PE), or polyvinylchlorid (PVC), so as to play a role in insulating and protecting the relay 11101.

The through-going hole 1413 may be a through-hole of the insulating covering member 141 through which the connection terminal 1111 goes. The through-going hole 1413 may be provided for the connection terminal 1111 to go through and be exposed, so as to facilitate electrical connection member to another electrical member 1101.

By using the technical solution of this embodiment, the insulating covering member 141 separates the switching unit 1112 from the external environment, thereby insulating and protecting the relay 11101, so as to improve use reliability of the power distribution apparatus 100.

In another embodiment of the present application, with reference to FIG. 14 or FIG. 15, the relay 11101 has a plurality of connection terminals 1111, a lateral portion of the insulating covering member 141 that faces away from the switching unit 1112 is provided with an insulating and isolating portion 1411, and the insulating and isolating portion 1411 is located between two adjacent connection terminals 1111.

There may be two, three, or four or more connection terminals 1111. For example, there are two connection terminals 1111, where one connection terminal 1111 is electrically connected to the connector 120 by using a second electrical connection member 152, and the other connection terminal 1111 is electrically connected to the another electrical member 1101 by using a third electrical connection member 153. The second electrical connection member 152 and the third electrical connection member 153 are each made of an electrically conductive material. The electrically conductive material may be, but is not limited to, an electrically conductive metal material such as copper or aluminum. For example, the second electrical connection member 152 and the third electrical connection member 153 may be copper bars.

The insulating and isolating portion 1411 may be a protrusion structure of a surface of the insulating covering member 141 facing away from the switching unit 1112, and the insulating and isolating portion 1411 is located between two adjacent connection terminals 1111, to insulate and isolate the two adjacent connection terminals 1111, thereby reducing a short-circuit risk and improving use reliability of the power distribution apparatus 100. For example, the insulating and isolating portion 1411 is also located between the second electrical connection member 152 and the third electrical connection member 153 adjacent to each other, to insulate and isolate the second electrical connection member 152 and the third electrical connection member 153, thereby reducing a short-circuit risk.

By using the technical solution of this embodiment, the insulating and isolating portion 1411 may insulate and isolate two adjacent connection terminals 1111, thereby reducing a short-circuit risk and improving use reliability of the power distribution apparatus 100.

In another embodiment of the present application, with reference to FIG. 14 or FIG. 15, one of a cavity wall of the first accommodating cavity 1311 and the insulating covering member 141 is provided with a snap-fit groove 1316, and the other is provided with a first snap-fit fastener 1412. The first snap-fit fastener 1412 is snap-fit to the snap-fit groove 1316.

It may be understood that, the cavity wall of the first accommodating cavity 1311 is provided with a snap-fit groove 1316, the insulating covering member 141 is provided with a first snap-fit fastener 1412, and the first snap-fit fastener 1412 is in a snap-fit connection with the snap-fit groove 1316; or the cavity wall of the first accommodating cavity 1311 is provided with a first snap-fit fastener 1412, the insulating covering member 141 is provided with a snap-fit groove 1316, and the first snap-fit fastener 1412 is in a snap-fit connection with the snap-fit groove 1316. After the insulating covering member 141 covers the first opening 13111, the first snap-fit fastener 1412 is snapped in the snap-fit groove 1316, thereby implementing a fixed connection between the insulating covering member 141 and the mounting base 131. In addition, after the insulating covering member 141 covers the first opening 13111, the insulating covering member 141 also covers the switching unit 1112, and the switching unit 1112 can also be positioned in the first accommodating cavity 1311 through a butted action between an inner wall of the insulating covering member 141 and an outer wall of the switching unit 1112.

For example, the snap-fit groove 1316 may be a groove structure provided on a cavity wall of the first accommodating cavity 1311, and the first snap-fit fastener 1412 may be a protrusion structure formed on an outer wall surface of the insulating covering member 141. Snap-fit grooves 1316 and first snap-fit fasteners 1412 are disposed in a one-to-one correspondence. A plurality of first snap-fit fasteners 1412 may be disposed, and the plurality of first snap-fit fasteners 1412 are distributed on two opposite sides of the insulating covering member 141, to improve reliability of fixing the insulating covering member 141 on the mounting base 131.

By using the technical solution of this embodiment, the first snap-fit fastener 1412 and the snap-fit groove 1316 are snap-fit to each other to fix the insulating covering member 141. The fixing structure is simple and the assembly operation is simple, which helps improve the production efficiency and reduce the manufacturing costs.

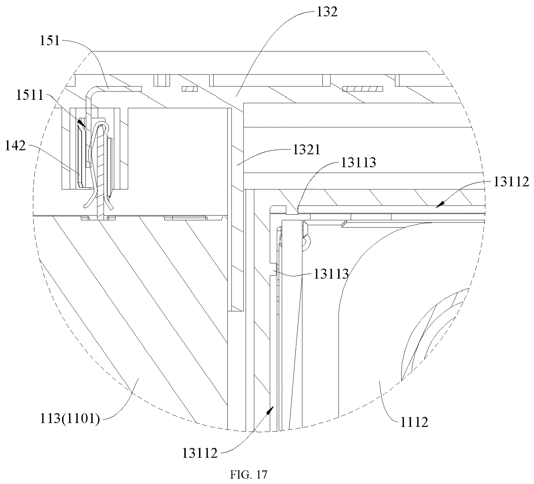

In another embodiment of the present application, with reference to FIG. 17, the power distribution apparatus 100 further includes a first electrical connection member 151, the first electrical connection member 151 has a connection end 1511, the electrical member 1101 has a plugging terminal 142 configured to electrically connect to another electrical member 1101, and the connection end 1511 is configured to electrically plug into a plugging terminal 142 of at least one electrical member 1101.

The first electrical connection member 151 may be a component configured to electrically connect the electrical member 1101 to another electrical member 1101. The first electrical connection member 151 is made of an electrically conductive material, for example, copper or aluminum. For example, the first electrical connection member 151 is a copper bar.

A plugging terminal 142 may refer to a terminal that is led out from an electrical member 1101 and that is used for electrical plugging. A connection end 1511 is plugged into the plugging terminal 142, so as to implement an electrical connection member between electrical members 1101. For example, the plugging terminal 142 may be a terminal that is led out from the coil of the relay 11101, or may be a terminal applied to a high voltage of the relay 11101.

The connection end 1511 may refer to an end of the first electrical connection member 151 that is electrically plugged into the plugging terminal 142. There may be a plurality of first electrical connection members 151, and a first electrical connection member 151 may be electrically plugged into a plugging terminal 142 of each electrical member 1101.

By using the technical solution of this embodiment, the first electrical connection member 151 may implement communication between the electrical member 1101 and another electrical member 1101, and the plugging terminal 142 and the connection end 1511 are electrically connected in an electrical plugging manner. The connection manner is simple, and assembly of the power distribution apparatus 100 is convenient.

In another embodiment of the present application, with reference to FIG. 15 to FIG. 17, the power distribution apparatus 100 further includes a first shell cover 132, the first electrical connection member 151 is mounted on the first shell cover 132, the first shell cover 132 is mounted on the mounting base 131, and a plugging opening of the plugging terminal 142 is disposed toward the first shell cover 132.

The first shell cover 132 may be connected to the mounting base 131 to form at least a part of a housing 130 of the power distribution apparatus 100, and the first shell cover 132 may be connected to the mounting base 131 in a manner such as covering, bolting, or bonding. For example, the first shell cover 132 and the mounting base 131 may jointly define a mounting space. The mounting space provides mounting space for the electrical member 1101 of the power distribution apparatus 100. The first shell cover 132 and the mounting base 131 may isolate the electrical member 1101 from the external environment, thereby protecting the electrical member 1101. The mounting base 131 may be a hollow structure with one end open. The first shell cover 132 may be a plate-shaped structure. The first shell cover 132 covers an open side of the mounting base 131, so that the first shell cover 132 and the mounting base 131 jointly define the mounting space. The first shell cover 132 and the mounting base 131 may each be a hollow structure with one side open, and the open side of the first shell cover 132 covers the open side of the mounting base 131. Certainly, the housing 130 formed by the first shell cover 132 and the mounting base 131 may be in various shapes, such as a cylinder, and a cuboid. The first shell cover 132 and the mounting base 131 are each made of an insulating material, for example, insulating plastic such as polypropylene (PP), polyethylene (PE), or polyvinylchlorid (PVC), so as to play a role in insulating and protecting the relay 11101.

That the first electrical connection member 151 is mounted on the first shell cover 132 may be understood as that, the first electrical connection member 151 is connected to the first shell cover 132. Specifically, the first electrical connection member 151 may be fixed on the first shell cover 132 in a manner such as screwing or snap-fit.

The plugging opening of the plugging terminal 142 is disposed toward the first shell cover 132. Specifically, the plugging terminal 142 is provided with a plugging hole into which the connection end 1511 is plugged. The plugging hole is provided with an opening through which the connection end 1511 is inserted into the plugging hole. The plugging opening of the plugging terminal 142 is disposed opposite to the first shell cover 132, and the connection end 1511 is disposed toward the mounting base 131. In this way, during assembly, after the electrical member 1101 is mounted on the mounting base 131, while the first shell cover 132 is snapped to the mounting base 131, because the plugging opening of the plugging terminal 142 faces the first shell cover 132, in a process in which the first shell cover 132 is snapped to the mounting base 131, the connection end 1511 may be automatically electrically plugged into the plugging terminal 142. In this way, assembly of the mounting base 131 and the first shell cover 132 and electrical plugging between the electrical member 1101 and the first electrical connection member 151 may also be simultaneously completed, thereby helping improve assembly efficiency of the power distribution apparatus 100. Alternatively, while the electrical member 1101 is mounted on the first shell cover 132, the connection end 1511 of the first electrical connection member 151 mounted on the first shell cover 132 may be inserted into the plugging terminal 142. In this way, assembly of the first electrical member 111 and the first shell cover 132 and electrical plugging of the plugging terminal 142 may be simultaneously completed, thereby helping improve assembly efficiency of the power distribution apparatus 100.

By using the technical solution of this embodiment, because the plugging terminal 142 faces the first shell cover 132, during assembly of the power distribution apparatus 100, assembly of the components and electrical plugging between the electrical member 1101 and the first electrical connection member 151 may be simultaneously completed, to help improve assembly efficiency of the power distribution apparatus 100.

In another embodiment of the present application, the first electrical connection member 151 is embedded in the first shell cover 132.

That the first electrical connection member 151 is embedded in the first shell cover 132 may be understood as that, the first electrical connection member 151 is located inside the first shell cover 132. In other words, the first shell cover 132 wraps the first electrical connection member 151. It should be noted that, the connection end 1511 is exposed to the first shell cover 132, so as to facilitate an electrical connection member to the electrical member 1101.

By using the technical solution of this embodiment, the first shell cover 132 may play a role in of insulating and protecting the first electrical connection member 151, thereby improving use reliability of the power distribution apparatus 100. In addition, the first electrical connection member 151 is located in the first shell cover 132, to help save the space, improve overall structural compactness, and also help reduce an outline size of the power distribution apparatus 100.

In an embodiment of the present application, the first electrical connection member 151 and the first shell cover 132 are of an integral injection molding structure.

By using the technical solution of this embodiment, the first electrical connection member 151 and the first shell cover 132 are manufactured by using a manufacturing process of integral injection molding. The manufacturing manner is simple, and connection strength between the first electrical connection member 151 and the first shell cover 132 is good, to help improve use reliability of the power distribution apparatus 100.

In an embodiment, a second gap is formed between two adjacent electrical members 1101, and the plugging terminal 142 is located outside the second gap. In this way, a plugging space required for plugging the corresponding connection end 1511 into the plugging terminal 142 is staggered from the second gap, so that the spacing between the two adjacent electrical members 1101 can be reduced, to help improve structural compactness and reduce an outline size of the entire power distribution apparatus 100.

In an embodiment, with reference to FIG. 14, an insulating member 154 is disposed between two second electrical connection members 152, so as to insulate and isolate the two second electrical connection members 152, thereby reducing a short-circuit risk and improving use reliability of the power distribution apparatus 100. The insulating member 154 and the mounting base 131 may be obtained in an integral forming manner, and are convenient and simple to manufacture.

In an embodiment, with reference to FIG. 14, FIG. 15, and FIG. 18, the mounting base 131 is formed with a plurality of accommodating cavities. The mounting base 131 is further provided with a plurality of openings. The openings are correspondingly in communication with the accommodating cavities respectively. Each electrical member 1101 may enter a corresponding accommodating cavity through a corresponding opening, to facilitate assembly of the power distribution apparatus 100. The housing 130 further includes a second shell cover 133. The first shell cover 132 may seal a part of the openings. The second shell cover 133 is snap-fit on the mounting base 131 and seals another part of the openings, so as to insulate the electrical member 1101 in the accommodating cavity from the external environment. The first shell cover 132 and the second shell cover 133 are disposed at two opposite sides of the mounting base 131. This design may facilitate assembly of the power distribution apparatus 100. At least some electrical members 1101 may be electrical members 1101 with shells removed. Cavity walls of accommodating cavities corresponding to the electrical members 1101 form shells 22 of the some electrical members 1101. A volume of the electrical member 1101 with the shell removed is smaller, to better help improve structural compactness and reduce an outline size of the entire power distribution apparatus 100. The mounting space is provided with a partition plate, to divide the mounting space into a plurality of accommodating cavities.

In an embodiment, with reference to FIG. 14, the housing 130 is further provided with a thermally conductive member 160. The thermally conductive member 160 can conduct heat generated inside the electrical member 1101 to the outside of the power distribution apparatus 100, thereby improving heat radiation performance of the power distribution apparatus 100. When the power distribution apparatus 100 is mounted on the mounting surface, the thermally conductive member 160 is attached to the mounting surface, so as to conduct heat generated inside the power distribution apparatus 100 to the outside, thereby improving heat radiation performance of the power distribution apparatus 100. The housing 130 is provided with an accommodating hole 1331 passing through the housing 130, and at least some electrical members 1101 in the power distribution apparatus 100 are in direct contact with the thermally conductive member 160 through the accommodating hole 1331, so as to improve the heat radiation efficiency. A thermally conductive member 160 is embedded in at least one of the first shell cover 132, the second shell cover 133, and the mounting base 131, and may be specifically set according to a mounting manner of the power distribution apparatus 100. For example, the second shell cover 133 is provided with an accommodating hole 1331, and a thermally conductive member 160 is embedded in the second shell cover 133 and is located on a lateral portion of the second shell cover 133 that faces away from the mounting base 131. The thermally conductive member 160 may be made of a material having a good heat conduction property, such as ceramic or thermally conductive silicone.

To clearly describe the technical solutions of the present application, some BDU structures are used as examples above for description.

### Embodiment 1

In this embodiment, with reference to FIG. 5 to FIG. 10, the power distribution apparatus 100 is a BDU, there are five electrical members 1101, and the five electrical members 1101 are respectively a main positive relay 11102, a main negative relay 11103, a pre-charge resistor 114, a fuse 112, and a pre-charge relay 113. There are two first electrical members 111, one of which is the main positive relay 11102, and the other of which is the main negative relay 11103. A first direction is parallel to a width direction (referring to the direction Y in the figures) of the main positive relay 11102, a second direction is parallel to a height direction (referring to the direction Z in the figures) of the main positive relay 11102. The main positive relay 11102 and the main negative relay 11103 are arranged in a third direction, and the third direction is a length direction (referring to the direction X in the figures) of the main positive relay 11102. The pre-charge relay 113 and the main negative relay 11103 are located on a left side of the main positive relay 11102. The pre-charge resistor 114 and the fuse 112 are located on a right side of the main positive relay 11102. The main negative relay 11103 is located between the main positive relay 11102 and the pre-charge relay 113. The pre-charge resistor 114 and the fuse 112 are disposed on top of one another. In this arrangement, the BDU has small sizes in the first direction and the second direction, and the BDU has a small overall outline size.

In this embodiment, the mounting base 131 is formed with two first accommodating cavities 1311, one second accommodating cavity 1312, one third accommodating cavity 1313, and one fourth accommodating cavity 1314. The main positive relay 11102 and the main negative relay 11103 are respectively disposed in the two first accommodating cavities 1311, the pre-charge resistor 114, the pre-charge relay 113, and the fuse 112 are respectively disposed in the second accommodating cavity 1312, the third accommodating cavity 1313, and the fourth accommodating cavity 1314, an opening of the second accommodating cavity 1312, an opening of the third accommodating cavity 1313, and first openings 13111 of the two first accommodating cavities 1311 are disposed downward, and an opening of the fourth accommodating cavity 1314 is disposed upward, the first shell cover 132 is snapped on a lower side of the mounting base 131 and seals the opening of the second accommodating cavity 1312, the opening of the third accommodating cavity 1313, and the two first openings 13111, and the first electrical connection member 151 is embedded in the first shell cover 132, and the connection end 1511 of the first electrical connection member 151 is exposed, to facilitate electrical plugging.

In this embodiment, the second shell cover 133 is snapped on an upper side of the mounting base 131 and seals the opening of the fourth accommodating cavity 1314. In addition, two connection terminals 1111 are led out from contacts of the main positive relay 11102, where one connection terminal 1111 is connected to the connector 120 through a second electrical member 1101, and the other connection terminal 1111 is connected to the fuse 112 through a third electrical member 1101; and two connection terminals 1111 are led out from contacts of the main negative relay 11103, where one connection terminal 1111 is connected to the connector 120 through a second electrical member 1101, the other connection terminal 1111 is electrically connected to one end of a third electrical connection member 153, and the other end of the third electrical connection member 153 is exposed out of the second shell cover 133 and is configured to electrically connect to an external component. In this way, through a bridged action of the third electrical connection member 153, an electrical connection member position between the BDU and the external electrical member 1101 may be conveniently led to a preset position, to facilitate electrical connection member. In addition, the second shell cover 133 may shield the second electrical connection member 152 and another third electrical connection member 153, which can improve an insulating protection property of the BDU. The main positive relay 11102 and the main negative relay 11103 are relays 11101 with the shells 22 removed.

In this embodiment, a bottom surface of the mounting base 131 is an outer interface 1315, the first direction is parallel to a width direction (referring to the direction Y in the figures) of the main positive relay 11102, is also parallel to a width direction (referring to the direction Y in the figures) of the mounting base 131, and is also parallel to a width direction (referring to the direction Y in the figures) of the entire BDU, and the outer interface 1315 is parallel to the first direction, that is, a value of A; is 0°. The second direction is parallel to a height direction (referring to the direction Z in the figures) of the main positive relay 11102, is also parallel to a height direction (referring to the direction Z in the figures) of the mounting base 131, and is also parallel to a height direction (referring to the direction Z in the figures) of the entire BDU. The connector 120 is mounted on a rear side of the mounting base 131, and a plugging direction (referring to the direction Y in the figures) of the connector 120 is parallel to the first direction, that is, a value of A₂ is 0°.

### Embodiment 2

A difference between this embodiment and Embodiment 1 is as follows: With reference to FIG. 13 to FIG. 18, the pre-charge resistor 114, the fuse 112, and the pre-charge relay 113 are located on the left side of the main positive relay 11102, the pre-charge relay 113 is located between the pre-charge resistor 114 and the main positive relay 11102, the fuse 112 is located above the pre-charge relay 113 and the pre-charge resistor 114, and the main negative relay 11103 is located on the right side of the main positive relay 11102. In this arrangement, the BDU has a minimum size in the first direction, and the BDU has a small overall outline size.

In this embodiment, the mounting base 131 is formed with two first accommodating cavities 1311, one second accommodating cavity 1312, and one third accommodating cavity 1313, the main positive relay 11102 and the main negative relay 11103 are respectively disposed in the two first accommodating cavities 1311, the fuse 112 is disposed in the second accommodating cavity 1312, the pre-charge resistor 114 and the pre-charge relay 113 are disposed in the third accommodating cavity 1313, the first openings 13111 of the two first accommodating cavities 1311 are disposed upward, the opening of the second accommodating cavity 1312 is disposed backward, and the opening of the third accommodating cavity 1313 is disposed forward, and the first shell cover 132 is snapped on the front side of the mounting base 131 and seals the opening of the third accommodating cavity 1313. The first shell cover 132 is provided with a surrounding edge 1321. The surrounding edge 1321 is inserted into the third accommodating cavity 1313 and defines a fifth accommodating cavity 1322. An insulating and isolating plate 1325 is disposed in the fifth accommodating cavity 1322. The insulating and isolating plate 1325 divides the fifth accommodating cavity 1322 into a sixth accommodating cavity 1323 and a seventh accommodating cavity 1324. The pre-charge resistor 114 and the pre-charge relay 113 are respectively disposed in the sixth accommodating cavity 1323 and the seventh accommodating cavity 1324. The insulating and isolating plate 1325, the surrounding edge 1321, and the first shell cover 132 are of an integral structure. The surrounding edge 1321 is provided with a second snap-fit fastener 13211. The pre-charge resistor 114 and the pre-charge relay 113 are fixed in the sixth accommodating cavity 1323 and the seventh accommodating cavity 1324 by using the second snap-fit fastener 13211, to facilitate assembly. The second shell cover 133 is snapped on the rear side of the mounting base 131 to seal the two first openings 13111 and the second accommodating cavity 1312, to implement insulating.

In this embodiment, a thermally conductive member 160 is embedded on the rear side of the second shell cover 133. The second shell cover 133 is provided with a plurality of accommodating holes 1331. A part of the second electrical connection member 152 and the third electrical connection member 153 may be located in the accommodating holes 1331 and be bonded to the thermally conductive member 160, to improve heat radiation performance. It should be noted that the connection terminal 1111 of the main positive relay 11102 and the connection terminal 1111 of the main negative relay 11103 are usually connected to a high-voltage circuit. The second electrical connection member 152 generates a large amount of heat, and the second electrical connection member 152 is in direct contact with the thermally conductive member 160, which can effectively improve heat radiation efficiency of the BDU.

In this embodiment, the main positive relay 11102 and the main negative relay 11103 are relays 11101 with shells removed. The relay 11101 with a shell removed includes a switching unit 1112 and two connection terminals 1111. The two connection terminals 1111 are connected to one end of the switching unit 1112. The switching unit 1112 is covered with an insulating covering member 141. The insulating covering member 141 seals the first opening 13111. The insulating covering member 141 is provided with two through-going holes 1413. The two connection terminals 1111 go through the two through-going holes 1413. The insulating covering member 141 is provided with an insulating and isolating portion 1411. The insulating and isolating portion 1411 is located between the two connection terminals 1111, and the insulating and isolating portion 1411 is located between the second electrical connection member 152 and the third electrical connection member 153 that are adjacent to each other, so as to insulate and isolate the two connection terminals 1111 and the second electrical connection member 152 and the third electrical connection member 153, thereby reducing a short-circuit risk.

In this embodiment, a first gap 13112 is formed between at least one outer wall surface of the switching unit 1112 and a cavity wall surface corresponding to the first accommodating cavity 1311, and at least one first gap 13112 is filled with a structural adhesive; and at least one cavity wall surface of the first accommodating cavity 1311 is provided with a rib 13113, and the rib 13113 is configured to butt against the outer wall surface of the switching unit 1112, so as to fix the switching unit 1112 in the first accommodating cavity 1311.

In this embodiment, an insulating member 154 is disposed between two second electrical connection members 152, so as to insulate and isolate the two second electrical connection members 152, thereby reducing a short-circuit risk and improving use reliability of the power distribution apparatus 100. The insulating member 154 and the mounting base 131 may be obtained in an integral forming manner, and are convenient and simple to manufacture.

In this embodiment, the cavity wall of the first accommodating cavity 1311 is provided with a snap-fit groove 1316, and the outer wall surface of the insulating covering member 141 is provided with a first snap-fit fastener 1412. Snap-fit grooves 1316 and first snap-fit fasteners 1412 are disposed in a one-to-one correspondence. Four first snap-fit fasteners 1412 may be disposed, and the four first snap-fit fasteners 1412 are uniformly distributed on two opposite sides of the insulating covering member 141, to improve reliability of fixing the insulating covering member 141 on the mounting base 131.

In this embodiment, the rear side surface of the mounting base 131 is an outer interface 1315, and the first direction is parallel to a width direction (referring to the direction Y in the figures) of the first electrical member 111, is also parallel to a width direction (referring to the direction Y in the figures) of the mounting base 131, and is also parallel to a width direction (referring to the direction Y in the figures) of the entire BDU; and the outer interface 1315 is perpendicular to the first direction, that is, a value of A₁ is 90°. The second direction is parallel to a height direction (referring to the direction Z in the figures) of the first electrical member 111, is also parallel to a height direction (referring to the direction Z in the figures) of the mounting base 131, and is also parallel to a height direction (referring to the direction Z in the figures) of the entire BDU. The connector 120 is mounted on the lower side of the mounting base 131, and a plugging direction of the connector 120 is perpendicular to the first direction, that is, a value of A₂ is 90°.

In an embodiment of the present application, a battery 1100 is provided, including the power distribution apparatus 100 according to the foregoing embodiments.

In an embodiment of the present application, a power consuming device is provided, including the power distribution apparatus 100 according to the foregoing embodiments; and/or including the battery 1100 according to the foregoing embodiments.

The foregoing descriptions are merely exemplary embodiments of the present application, but are not intended to limit the present application. Any modification, equivalent replacement, or improvement and the like made within the spirit and principle of the present application fall within the protection scope of the present application.

## Claims

1. A power distribution apparatus, comprising:
an electrical assembly, wherein the electrical assembly comprises at least two electrical members; among the at least two electrical members, an electrical member having a maximum size in a first direction is a first electrical member; a size of the first electrical member in the first direction is not greater than sizes of the first electrical member in other directions; and a ratio of a size of the electrical assembly in the first direction to the size of the first electrical member in the first direction is M, wherein 1≤M≤1.2.

2. The power distribution apparatus according to claim 1, wherein 1≤M≤1.1.

3. The power distribution apparatus according to claim 1 or 2, wherein the power distribution apparatus further comprises a mounting base, and the first electrical member is mounted on the mounting base; and an overall size of the first electrical member plus the mounting base in the first direction is not greater than sizes of the power distribution apparatus in other directions.

4. The power distribution apparatus according to claim 3, wherein the mounting base has an outer interface, the outer interface forms a first preset angle with the first direction, and the first preset angle is A₁, wherein 0°≤A₁≤45°, or 45°<A₁≤90°.

5. The power distribution apparatus according to claim 3 or 4, wherein the power distribution apparatus further comprises a connector configured to electrically connect the electrical member and an external component, and the connector is mounted on the mounting base.

6. The power distribution apparatus according to any one of claims 3 to 5, wherein the first electrical member is a fuse, a resistor, a relay, or a current sensor.

7. The power distribution apparatus according to claim 6, wherein when the first electrical member is a relay, the relay comprises a switching unit, the mounting base is constructed with a first accommodating cavity, and the switching unit is exposed in the first accommodating cavity.

8. The power distribution apparatus according to claim 7, wherein a first gap is formed between at least one outer wall surface of the switching unit and a cavity wall surface corresponding to the first accommodating cavity, and at least one first gap is filled with a structural adhesive.

9. The power distribution apparatus according to claim 8, wherein at least one cavity wall surface of the first accommodating cavity is provided with a rib, and the rib is configured to butt against the outer wall surface of the switching unit.

10. The power distribution apparatus according to any one of claims 7 to 9, wherein the relay further comprises a connection terminal configured to electrically connect to another electrical member, the switching unit is connected to the connection terminal, the first accommodating cavity has a first opening, and the connection terminal protrudes from the first opening.

11. The power distribution apparatus according to claim 10, wherein the power distribution apparatus further comprises an insulating covering member, the insulating covering member covers the first opening, the insulating covering member is provided with a through-going hole, and the connection terminal goes through the through-going hole, to expose the connection terminal out of the mounting base.

12. The power distribution apparatus according to claim 11, wherein the relay has a plurality of connection terminals, a lateral portion of the insulating covering member that faces away from the switching unit is provided with an insulating and isolating portion, and the insulating and isolating portion is located between two adjacent connection terminals.

13. The power distribution apparatus according to claim 11 or 12, wherein one of a cavity wall of the first accommodating cavity and the insulating covering member is provided with a snap-fit groove, and the other is provided with a first snap-fit fastener and a first opening configured to be snap-fit to the snap-fit groove.

14. The power distribution apparatus according to any one of claims 3 to 13, wherein the power distribution apparatus further comprises a first electrical connection member, the first electrical connection member has a connection end, the electrical member is provided with a plugging terminal configured to electrically connect to another electrical member, and the connection end is configured to electrically plug into a plugging terminal of at least one of the electrical members.

15. The power distribution apparatus according to claim 14, wherein the power distribution apparatus further comprises a first shell cover, the first electrical connection member is mounted on the first shell cover, the first shell cover is mounted on the mounting base, and a plugging opening of the plugging terminal is disposed toward the first shell cover.

16. The power distribution apparatus according to claim 15, wherein the first electrical connection member is embedded in the first shell cover.

17. The power distribution apparatus according to any one of claims 1 to 16, wherein a ratio of a size of the electrical assembly in a second direction to a size of the first electrical member in the second direction is N, wherein 1≤N≤1.2, and the second direction intersects with the first direction.

18. The power distribution apparatus according to claim 17, wherein 1≤N≤1.1.

19. The power distribution apparatus according to claim 17 or 18, wherein the size of the first electrical member in the second direction is not less than sizes of the first electrical member in other directions.

20. The power distribution apparatus according to claim 19, wherein a plurality of first electrical members are provided, the plurality of first electrical members are arranged in a third direction, the third direction is perpendicular to the first direction, and the third direction is perpendicular to the second direction.

21. The power distribution apparatus according to any one of claims 1 to 20, wherein the first electrical member is an electrical member having a largest outline size.

22. A battery, comprising the power distribution apparatus according to claims 1 to 21.

23. A power consuming device, comprising the power distribution apparatus according to claims 1 to 21; and/or comprising the battery according to claim 22.
